# EUROPEAN PATENT SPECIFICATION

(11) **EP 4 518 149 B1**
(45) Date of publication and mention of the grant of the patent: **26.08.2026**
(21) Application number: 24197243.9
(22) Date of filing: 29.08.2024
(51) Int. Cl.: H02S 50/00

(54) **PHOTOVOLTAIC SYSTEM AND I-V DIAGNOSIS METHOD FOR PHOTOVOLTAIC MANAGEMENT APPARATUS**
FOTOVOLTAISCHES SYSTEM UND I-V-DIAGNOSEVERFAHREN FÜR FOTOVOLTAISCHE VERWALTUNGSVORRICHTUNG
SYSTÈME PHOTOVOLTAÏQUE ET PROCÉDÉ DE DIAGNOSTIC I-V POUR APPAREIL DE GESTION PHOTOVOLTAÏQUE

(30) Priority: 31.08.2023 CN 202311132186
(43) Date of publication of application: 05.03.2025
(73) Proprietor: Huawei Digital Power Technologies Co., Ltd., Shenzhen, Guangdong 518043 (CN)
(72) Inventor: Yuan, Renyu, Shenzhen 518043 (CN); Liu, Zilong, Shenzhen 518043 (CN); Wang, Pengyang, Shenzhen 518043 (CN); Zhou, Peng, Shenzhen 518043 (CN); Sun, Linchao, Shenzhen 518043 (CN); Jin, Yangkun, Shenzhen 518043 (CN)
(74) Representative: Gill Jennings & Every LLP

(56) References cited:
- EP-A1- 4 236 063

## Description

### TECHNICAL FIELD

This application relates to the field of photovoltaic power generation technologies, and in particular, to a photovoltaic system and an I-V diagnosis method for a photovoltaic management apparatus.

### BACKGROUND

Current-voltage (I-V) diagnosis is used to diagnose a fault based on I-V scanning data of a photovoltaic string in a photovoltaic system, to promptly identify a potential fault of the photovoltaic string. Therefore, the I-V diagnosis is important for guiding photovoltaic station operations and maintenance and improving benefit of the photovoltaic system. Currently, instant scanning is mainly used in the I-V diagnosis, to obtain the I-V scanning data of the photovoltaic string and diagnose the fault when the I-V scanning data meets a fault diagnosis condition. However, in the instant scanning manner, when the I-V scanning data does not meet the fault diagnosis condition, a large amount of invalid I-V scanning data needs to be frequently obtained. This not only causes an energy yield loss of the photovoltaic system, but also causes frequently fluctuations of power generation load of the photovoltaic system.

EP4236063A1 relates to the field of photovoltaic power generation technologies, and provides a photovoltaic power generation system, a photovoltaic inverter, and an IV curve scanning method. The photovoltaic power generation system includes a controller and M groups of DC-DC circuits. Each group of DC-DC circuits include N DC-DC circuits, where M is a positive integer, and N is an integer greater than 1, an input end of each DC-DC circuit is connected to at least one photovoltaic unit, and each photovoltaic unit includes at least one photovoltaic module. The controller controls the N DC-DC circuits in each group of DC-DC circuits to sequentially start online IV curve scanning, and controls a time interval at which two adjacent DC-DC circuits start online IV curve scanning to be less than duration of online IV curve scanning performed by one DC-DC circuit. The photovoltaic power generation system can reduce a fluctuation of a power output during online IV curve scanning, reduce duration of online IV curve scanning performed by the photovoltaic power generation system, and further reduce impact of online IV curve scanning on grid-connected power quality.

### SUMMARY

This application provides a photovoltaic system and an I-V diagnosis method for a photovoltaic management apparatus. This can greatly reduce a quantity of times of invalid scanning performed by a power converter, thereby avoiding frequent fluctuations of power generation load and an energy yield loss caused by the invalid scanning to the photovoltaic system. This has high applicability.

According to a first aspect, this application provides a photovoltaic system as set out in appended claim 1.

According to embodiments of this application, before the I-V scanning instruction is delivered, it may be automatically identified, in the preset time period in the day, whether the output current average value or the output current is in the I-V scanning current interval, and the I-V scanning instruction is delivered when all data meets a condition, to enable the power converter to perform effective I-V scanning. This can greatly reduce a quantity of times of invalid scanning performed by the power converter, thereby avoiding frequent fluctuations of power generation load of the photovoltaic system and an energy yield loss caused by the invalid scanning to the photovoltaic system. In addition, precision of an I-V curve is improved, availability, accuracy, and consistency of I-V diagnosis are further improved, an identification manner is more accurate and flexible, a user does not need to determine an I-V scanning condition by him/herself, and a user operation is simpler. This avoids low precision of the I-V diagnosis caused by inaccurate determining of the user on the I-V scanning condition, and has high applicability.

With reference to the first aspect, in a possible implementation, when the input end of the power converter is configured to connect to the plurality of photovoltaic units, the photovoltaic management apparatus is configured to: obtain a current standard deviation of the plurality of photovoltaic units in m minutes based on output current average values of the plurality of photovoltaic units in each of the m minutes before the current moment and the output current average values of the plurality of photovoltaic units at the current moment, and deliver the I-V scanning instruction to the power converter in response to that the output current average values of the plurality of photovoltaic units at the current moment are in the I-V scanning current interval, and that the current standard deviation is in a preset current standard deviation interval. The current standard deviation represents a current fluctuation of the plurality of photovoltaic units in the m minutes, and the current fluctuation of the plurality of photovoltaic units in the m minutes may represent an intensity fluctuation of irradiation received by the plurality of photovoltaic units. When the current standard deviation is in the preset current standard deviation interval, it may indicate that intensities of irradiation received by the plurality of photovoltaic units are stable. When the input end of the power converter is configured to connect to the photovoltaic unit, the photovoltaic management apparatus is configured to: obtain a current standard deviation of the photovoltaic unit in m minutes based on an output current of the photovoltaic unit in each of the m minutes before the current moment and the output current of the photovoltaic unit at the current moment, and deliver the I-V scanning instruction to the power converter in response to that the output current of the photovoltaic unit at the current moment is in the I-V scanning current interval, and that the current standard deviation is in a preset current standard deviation interval. The current standard deviation represents a current fluctuation of the photovoltaic unit in the m minutes, and the current fluctuation of the photovoltaic unit in the m minutes may represent an intensity fluctuation of irradiation received by the photovoltaic unit. When the current standard deviation is in the preset current standard deviation interval, it may indicate that an intensity of irradiation received by the photovoltaic unit is stable.

According to embodiments of this application, it may be automatically identified, in the preset time period in the day, whether the output current average value or the output current is in the I-V scanning current interval and whether the current standard deviation is in the preset current standard deviation interval, and the I-V scanning instruction is delivered when all data meets conditions, to enable the power converter to perform I-V scanning. Therefore, the precision of the I-V curve is improved, and the availability, accuracy, and consistency of the I-V diagnosis are further improved , an I-V diagnosis error caused by environmental stability is effectively avoided, and this has higher applicability.

With reference to the first aspect, in a possible implementation, the photovoltaic management apparatus is configured to deliver, in the preset time period in the day, the I-V scanning instruction to the power converter in response to that the intensities of irradiation received by the plurality of photovoltaic units at the current moment or the intensity of irradiation received by the photovoltaic unit at the current moment are/is in a preset intensity interval of irradiation. According to embodiments of this application, it may be automatically identified, in the preset time period in the day, whether the intensity of irradiation is in the preset intensity interval of irradiation, and the I-V scanning instruction is delivered when the intensity of irradiation is in the preset intensity interval of irradiation, to enable the power converter to perform I-V scanning. Therefore, the accuracy of the I-V curve is improved, and the availability, accuracy, and consistency of the I-V diagnosis are further improved.

With reference to the first aspect, in a possible implementation, the photovoltaic management apparatus is configured to display a scheduled scanning time window of the power converter in response to a trigger operation of a scheduled scanning button in an I-V scanning interface of the photovoltaic management apparatus. The I-V scanning interface is a display interface that includes the scheduled scanning button and an instant scanning button, and the scheduled scanning time window is a window in which the user sets scheduled scanning time for performing I-V scanning by the power converter. Further, the photovoltaic management apparatus is configured to obtain the scheduled scanning time of the power converter in response to an input operation of the scheduled scanning time window. In this case, scheduled scanning is started. Still further, the photovoltaic management apparatus is configured to deliver the I-V scanning instruction to the power converter in response to that the output current average values of the plurality of photovoltaic units at the current moment or the output current of the photovoltaic unit at the current moment are/is in the I-V scanning current interval, and that the current moment is in the scheduled scanning time. According to embodiments of this application, after scheduled scanning is started, it may be automatically identified, in the preset time period in the day, whether the output current average value or the output current is in the I-V scanning current interval and whether the current moment is in the scheduled scanning time, and the I-V scanning instruction is delivered when all data meets conditions, to enable the power converter to perform effective I-V scanning, thereby avoiding a large quantity of times of invalid scanning in an instant scanning manner, and making the user operation simpler.

With reference to the first aspect, in a possible implementation, when the input end of the power converter is configured to connect to the plurality of photovoltaic units, the photovoltaic management apparatus is configured to perform curve fitting on output parameter average values of the plurality of photovoltaic units at various moments of each in n days before the current moment, to obtain a first output parameter curve of the plurality of photovoltaic units in each day. The first output parameter curve includes the output parameter average values of the plurality of photovoltaic units at the various moments in each day, and the output parameter average values may be the same as or different from output parameter average values of the plurality of photovoltaic units at the various moments in each day before curve fitting is performed. An output parameter may be an output current or an output power. Further, the photovoltaic management apparatus is configured to separately obtain differences between the output parameter average values of the plurality of photovoltaic units at the various moments in the first output parameter curve in each day and output parameter average values of moments that are in a second output parameter curve and that correspond to the various moments, to obtain output parameter average value differences of the plurality of photovoltaic units at the various moments in each day. The second output parameter curve is an output parameter curve obtained when the photovoltaic units are not shaded, and the second output parameter curve includes the output parameter average values of the plurality of photovoltaic units at the various moments in the day. The various moments in the first output parameter curve and the moments that are in the second output parameter curve and that correspond to the various moments are same moments in the day.

Further, the photovoltaic management apparatus is configured to use, as output parameter average value loss rates of the plurality of photovoltaic units at the various moments in each day, ratios of absolute values of the output parameter average value differences of the plurality of photovoltaic units at the various moments in each day to the output parameter average values of the moments that are in the second output parameter curve and that correspond to the various moments. Further, the photovoltaic management apparatus is configured to: separately perform weighted summation on output parameter average value loss rates of the plurality of photovoltaic units at same moments in the n days, to obtain shading factors of the plurality of photovoltaic units at the various moments in the day, and in response to that shading factors of the plurality of photovoltaic units at at least one moment in the day are greater than a preset shading factor threshold, use, as shaded time periods of the plurality of photovoltaic units in the day, a sum of a period of time in which the at least one moment in the day is located. Still further, the photovoltaic management apparatus is configured to remove the shaded time periods of the plurality of photovoltaic units in the day from irradiation time periods in the day, to output the preset time period in the day. In other words, the preset time period is a time period (which may be referred to as an unshaded time period for short) in which the plurality of photovoltaic units are not shaded in the day. The shaded time period is a time period in which the plurality of photovoltaic units are shaded, and the irradiation time period is a time period in which the intensities of irradiation are greater than 0 or a specific intensity of irradiation in the day. According to embodiments of this application, the preset time period (namely, the unshaded time period) in the day may be automatically identified, so that the power converter is prevented from performing I-V scanning in the time periods in which the plurality of photovoltaic units are shaded, and precision of I-V curves obtained by performing I-V scanning by the power converter is improved.

With reference to the first aspect, in a possible implementation, when the input end of the power converter is configured to connect to the photovoltaic unit, the photovoltaic management apparatus is configured to perform curve fitting on output parameters of the photovoltaic unit at various moments of each in n days before the current moment, to obtain a first output parameter curve of the photovoltaic unit in each day. The first output parameter curve includes the output parameters of the photovoltaic unit at the various moments in each day, and the output parameters may be the same as or different from output parameters of the photovoltaic unit at the various moments in each day before curve fitting is performed. An output parameter may be an output current or an output power. Further, the photovoltaic management apparatus is configured to separately obtain differences between the output parameters of the photovoltaic unit at the various moments in the first output parameter curve in each day and output parameters of moments that are in a second output parameter curve and that correspond to the various moments, to obtain output parameter differences of the photovoltaic unit at the various moments in each day. The second output parameter curve is an output parameter curve obtained when the photovoltaic unit is not shaded, and the second output parameter curve includes the output parameters of the photovoltaic unit at the various moments in the day. The various moments in the first output parameter curve and the moments that are in the second output parameter curve and that correspond to the various moments are same moments in the day.

Further, the photovoltaic management apparatus is configured to use, as output parameter loss rates of the photovoltaic unit at the various moments in each day, ratios of absolute values of the output parameter differences of the photovoltaic unit at the various moments in each day to the output parameters of the moments that are in the second output parameter curve and that correspond to the various moments. An absolute value of an output parameter difference may also be referred to as an output parameter loss amount. Further, the photovoltaic management apparatus is configured to: separately perform weighted summation on output parameter loss rates of the photovoltaic unit at same moments in the n days, to obtain shading factors of the photovoltaic unit at the various moments in the day, and in response to that a shading factor of the photovoltaic unit at at least one moment in the day is greater than a preset shading factor threshold, use, as a shaded time period of the photovoltaic unit in the day, a sum of a period of time in which the at least one moment in the day is located. Still further, the photovoltaic management apparatus is configured to remove the shaded time period of the photovoltaic unit in the day from an irradiation time period in the day, to output the preset time period in the day. In other words, the preset time period is a time period in which the photovoltaic unit is not shaded in the day. The shaded time period is a time period in which the photovoltaic unit is shaded, and the irradiation time period is a time period in which the intensity of irradiation is greater than 0 or a specific intensity of irradiation in the day. According to embodiments of this application, the preset time period (namely, an unshaded time period) in the day may be automatically identified, so that the power converter is prevented from performing I-V scanning in the time period in which the photovoltaic unit connected to the power converter is shaded, and the precision of the I-V curve obtained by performing I-V scanning by the power converter is improved.

With reference to the first aspect, in a possible implementation, when the photovoltaic system includes a plurality of power converters, the photovoltaic management apparatus is configured to deliver the I-V scanning instruction to y power converters in x power converters in response to that the output current average values, at the current moment, of the plurality of photovoltaic units connected to each of the x power converters in the plurality of power converters are in the I-V scanning current interval, or that the output current, at the current moment, of the photovoltaic unit connected to each power converter is in the I-V scanning current interval. y is an upper limit quantity of power converters that perform I-V scanning at a same moment. According to embodiments of this application, the upper limit quantity of power converters that perform I-V scanning at the same moment in the photovoltaic system may be limited, so that a power generation fluctuation caused by I-V scanning performed by the power converter to the photovoltaic system is suppressed. This reduces impact of the photovoltaic system on stability of the power grid due to a large power generation fluctuation, and has the high applicability.

With reference to the first aspect, in a possible implementation, the photovoltaic management apparatus is configured to obtain, in response to that z power converters in the plurality of power converters have completed I-V scanning on photovoltaic units connected to the z power converters, or a time point at which any one of z power converters performs I-V scanning reaches I-V scanning end time, an I-V curve of a photovoltaic unit connected to a power converter that is in the z power converters and that has completed I-V scanning. Further, the photovoltaic management apparatus is configured to: perform I-V diagnosis on the I-V curve of the photovoltaic unit connected to the power converter that is in the z power converters and that has completed I-V scanning, and output a fault diagnosis report of the photovoltaic unit connected to the power converter that is in the z power converters and that has completed I-V scanning. According to embodiments of this application, a smoother and more accurate I-V curve can be obtained, thereby improving the precision of the I-V diagnosis. This has the higher applicability.

According to a second aspect, this application provides an I-V diagnosis method for a photovoltaic management apparatus as set out in appended claim 8.

According to embodiments of this application, after scheduled scanning is started, it may be automatically identified, in the preset time period in the day, whether the output current average value or the output current is in the I-V scanning current interval and whether the current moment is in the scheduled scanning time, and the I-V scanning instruction is delivered when all data meets conditions, to enable the power converter to perform effective I-V scanning, thereby avoiding a large quantity of times of invalid scanning in an instant scanning manner. Therefore, this avoids frequent fluctuations of power generation load of the photovoltaic system and an energy yield loss caused by the invalid scanning to the photovoltaic system. In addition, precision of an I-V curve is improved, availability, accuracy, and consistency of I-V diagnosis are further improved, an identification manner is more accurate and flexible, a user does not need to determine an I-V scanning condition by him/herself, and a user operation is simpler. This avoids low precision of the I-V diagnosis caused by inaccurate determining of the user on the I-V scanning condition, and has high applicability.

With reference to the second aspect, in a possible implementation, when the input end of the power converter is configured to connect to the plurality of photovoltaic units, the photovoltaic management apparatus obtains a current standard deviation of the plurality of photovoltaic units in m minutes based on output current average values of the plurality of photovoltaic units in each of the m minutes before the current moment and the output current average values of the plurality of photovoltaic units at the current moment, and delivers the I-V scanning instruction to the power converter in response to that the output current average values of the plurality of photovoltaic units at the current moment are in the I-V scanning current interval, that the current moment is in the scheduled scanning time, and that the current standard deviation is in a preset current standard deviation interval. When the current standard deviation is in the preset current standard deviation interval, it may indicate that intensities of irradiation received by the plurality of photovoltaic units are stable. When the input end of the power converter is configured to connect to the photovoltaic unit, the photovoltaic management apparatus obtains a current standard deviation of the photovoltaic unit in m minutes based on an output current of the photovoltaic unit in each of the m minutes before the current moment and the output current of the photovoltaic unit at the current moment, and delivers the I-V scanning instruction to the power converter in response to that the output current of the photovoltaic unit at the current moment is in the I-V scanning current interval, that the current moment is in the scheduled scanning time, and that the current standard deviation is in a preset current standard deviation interval. When the current standard deviation is in the preset current standard deviation interval, it may indicate that an intensity of irradiation received by the photovoltaic unit is stable.

According to embodiments of this application, it may be automatically identified, in the preset time period in the day, whether the output current average value or the output current is in the I-V scanning current interval, whether the current moment is in the scheduled scanning time, and whether the current standard deviation is in the preset current standard deviation interval, and the I-V scanning instruction is delivered when all data meets conditions, to enable the power converter to perform I-V scanning. Therefore, the precision of the I-V curve, and the availability, accuracy, and consistency of the I-V diagnosis are improved, an I-V diagnosis error caused by environmental stability is effectively avoided, and this has higher applicability.

With reference to the second aspect, in a possible implementation, the photovoltaic management apparatus delivers, in the preset time period in the day, the I-V scanning instruction to the power converter in response to that intensities of irradiation received by the plurality of photovoltaic units at the current moment or an intensity of irradiation received by the photovoltaic unit at the current moment are/is in a preset intensity interval of irradiation, and that the current moment is in the scheduled scanning time. According to embodiments of this application, it may be automatically identified, in the preset time period in the day, whether the intensity of irradiation is in the preset intensity interval of irradiation and whether the current moment is in the scheduled scanning time, and the I-V scanning instruction is delivered when all data meets conditions, to enable the power converter to perform I-V scanning, thereby avoiding the large quantity of times of invalid scanning in the instant scanning manner, and improving the precision of the I-V curve. This further improves the availability, accuracy, and consistency of the I-V diagnosis, and makes the user operation simpler.

With reference to the second aspect, in a possible implementation, the photovoltaic management apparatus displays a scheduled scanning time window of the power converter in response to a trigger operation of a scheduled scanning button in an I-V scanning interface of the photovoltaic management apparatus. Further, the photovoltaic management apparatus obtains the scheduled scanning time of the power converter in response to an input operation of the scheduled scanning time window. According to embodiments of this application, the conventional instant scanning manner may be replaced by a scheduled scanning manner, so that the user operation is simpler, and user experience is better.

With reference to the second aspect, in a possible implementation, when the power converter is configured to connect to the plurality of photovoltaic units, the photovoltaic management apparatus performs curve fitting on output parameter average values of the plurality of photovoltaic units at various moments of each in n days before the current moment, to obtain a first output parameter curve of the plurality of photovoltaic units in each day. The first output parameter curve includes the output parameter average values of the plurality of photovoltaic units at the various moments in each day, and the output parameter average values may be the same as or different from output parameter average values of the plurality of photovoltaic units at the various moments in each day before curve fitting is performed. Further, the photovoltaic management apparatus separately obtains differences between the output parameter average values of the plurality of photovoltaic units at the various moments in the first output parameter curve in each day and output parameter average values of moments that are in a second output parameter curve and that correspond to the various moments, to obtain output parameter average value differences of the plurality of photovoltaic units at the various moments in each day. The second output parameter curve is an output parameter curve obtained when the photovoltaic units are not shaded, and the second output parameter curve includes the output parameter average values of the plurality of photovoltaic units at the various moments in the day. The various moments in the first output parameter curve and the moments that are in the second output parameter curve and that correspond to the various moments are same moments in the day.

Further, the photovoltaic management apparatus uses, as output parameter average value loss rates of the plurality of photovoltaic units at the various moments in each day, ratios of absolute values of the output parameter average value differences of the plurality of photovoltaic units at the various moments in each day to the output parameter average values of the moments that are in the second output parameter curve and that correspond to the various moments. Further, the photovoltaic management apparatus separately performs weighted summation on output parameter average value loss rates of the plurality of photovoltaic units at same moments in the n days, to obtain shading factors of the plurality of photovoltaic units at the various moments in the day, and in response to that shading factors of the plurality of photovoltaic units at at least one moment in the day are greater than a preset shading factor threshold, uses, as shaded time periods of the plurality of photovoltaic units in the day, a sum of a period of time in which the at least one moment in the day is located. Still further, the photovoltaic management apparatus removes the shaded time periods of the plurality of photovoltaic units in the day from irradiation time periods in the day, to output the preset time period (namely, an unshaded time period) in the day. According to embodiments of this application, after scheduled scanning is started, the preset time period in the day may be automatically identified, so that the power converter is prevented from performing I-V scanning in the time periods in which the plurality of photovoltaic units are shaded, and precision of I-V curves obtained by performing I-V scanning by the power converter is improved.

With reference to the second aspect, in a possible implementation, when the power converter is configured to connect to the photovoltaic unit, the photovoltaic management apparatus performs curve fitting on output parameters of the photovoltaic unit at various moments of each in n days before the current moment, to obtain a first output parameter curve of the photovoltaic unit in each day. The first output parameter curve includes the output parameters of the photovoltaic unit at the various moments in each day, and the output parameters may be the same as or different from output parameters of the photovoltaic unit at the various moments in each day before curve fitting is performed. Further, the photovoltaic management apparatus separately obtains differences between the output parameters of the photovoltaic unit at the various moments in the first output parameter curve in each day and output parameters of moments that are in a second output parameter curve and that correspond to the various moments, to obtain output parameter differences of the photovoltaic unit at the various moments in each day. The second output parameter curve is an output parameter curve obtained when the photovoltaic unit is not shaded, and the second output parameter curve includes the output parameters of the photovoltaic unit at the various moments in the day. The various moments in the first output parameter curve and the moments that are in the second output parameter curve and that correspond to the various moments are same moments in the day.

Further, the photovoltaic management apparatus uses, as output parameter loss rates of the photovoltaic unit at the various moments in each day, ratios of absolute values of the output parameter differences of the photovoltaic unit at the various moments in each day to the output parameters of the moments that are in the second output parameter curve and that correspond to the various moments. An absolute value of an output parameter difference may also be referred to as an output parameter loss amount. Further, the photovoltaic management apparatus separately performs weighted summation on output parameter loss rates of the photovoltaic unit at same moments in the n days, to obtain shading factors of the photovoltaic unit at the various moments in the day, and in response to that a shading factor of the photovoltaic unit at at least one moment in the day is greater than a preset shading factor threshold, uses, as a shaded time period of the photovoltaic unit in the day, a sum of a period of time in which the at least one moment in the day is located. Still further, the photovoltaic management apparatus removes the shaded time period of the photovoltaic unit in the day from an irradiation time period in the day, to output the preset time period (namely, an unshaded time period) in the day. According to embodiments of this application, after scheduled scanning is started, the preset time period in the day may be automatically identified, so that the power converter is prevented from performing I-V scanning in the time period in which the photovoltaic unit is shaded, and the precision of the I-V curve obtained by performing I-V scanning by the power converter is improved.

With reference to the second aspect, in a possible implementation, when the power converter is configured to connect to the plurality of photovoltaic units, the photovoltaic management apparatus separately normalizes, based on maximum power point currents of the photovoltaic units, the output current average values of the plurality of photovoltaic units in each of the m minutes before the current moment, to obtain the normalized output current average values of the plurality of photovoltaic units in each minute. Further, the photovoltaic management apparatus normalizes the output current average values of the plurality of photovoltaic units at the current moment based on the maximum power point currents, to obtain the normalized output current average values of the plurality of photovoltaic units at the current moment. Still further, the photovoltaic management apparatus separately obtains a difference between the normalized output current average values of the plurality of photovoltaic units in each minute and the normalized output current average values at the current moment, to obtain current residuals of the plurality of photovoltaic units in each minute, and performs standardized processing on the current residuals of the plurality of photovoltaic units in each minute, to obtain the current standard deviation of the plurality of photovoltaic units in the m minutes. According to embodiments of this application, the current standard deviation that represents current fluctuations of the plurality of photovoltaic units in the m minutes may be collected, to determine whether an intensity fluctuation of irradiation of an environment in which the plurality of photovoltaic units is located is relatively stable, and further predict, in advance, stability of the environment in which the plurality of photovoltaic units is located.

With reference to the second aspect, in a possible implementation, when the power converter is configured to connect to the photovoltaic unit, the photovoltaic management apparatus separately normalizes, based on a maximum power point current of the photovoltaic unit, the output current of the photovoltaic unit in each minute, to obtain a normalized output current value of the photovoltaic unit in each minute. Further, the photovoltaic management apparatus normalizes the output current of the photovoltaic unit at the current moment based on the maximum power point current, to obtain a normalized output current value of the photovoltaic unit at the current moment. Still further, the photovoltaic management apparatus separately obtains a difference between the normalized output current value of the photovoltaic unit in each minute and the normalized output current value at the current moment, to obtain a current residual of the photovoltaic unit in each minute, and performs standardized processing on the current residual of the photovoltaic unit in each minute, to obtain the current standard deviation of the photovoltaic unit in the m minutes. According to embodiments of this application, the current standard deviation that represents current fluctuations of the photovoltaic unit in the m minutes may be collected, to determine whether an intensity fluctuation of irradiation of an environment in which the photovoltaic unit is located is relatively stable, and further predict, in advance, stability of the environment in which the photovoltaic unit is located.

With reference to the second aspect, in a possible implementation, when the power converter is configured to connect to the plurality of photovoltaic units, the photovoltaic management apparatus delivers the I-V scanning instruction to y power converters in x power converters in response to that the output current average values, at the current moment, of the plurality of photovoltaic units connected to each of the x power converters in a plurality of power converters are in the I-V scanning current interval, and that the current moment is in the scheduled scanning time. y is an upper limit quantity of power converters that perform I-V scanning at a same moment. When the power converter is configured to connect to the photovoltaic unit, the photovoltaic management apparatus delivers the I-V scanning instruction to y power converters in x power converters in response to that the output current, at the current moment, of the photovoltaic unit connected to each of the x power converters in a plurality of power converters is in the I-V scanning current interval, and that the current moment is in the scheduled scanning time. y is an upper limit quantity of power converters that perform I-V scanning at a same moment. According to embodiments of this application, the upper limit quantity of power converters that perform I-V scanning at the same moment in the photovoltaic system may be limited, so that a power generation fluctuation caused by I-V scanning performed by the power converter to the photovoltaic system is suppressed. This reduces impact of the photovoltaic system on stability of a power grid due to a large power generation fluctuation, and has the high applicability.

With reference to the second aspect, in a possible implementation, the photovoltaic management apparatus obtains, in response to that z power converters in the plurality of power converters have completed I-V scanning on photovoltaic units connected to the z power converters, or a time point at which any one of z power converters performs I-V scanning reaches I-V scanning end time of the scheduled scanning time, an I-V curve of a photovoltaic unit connected to a power converter that is in the z power converters and that has completed I-V scanning. Further, the photovoltaic management apparatus performs I-V diagnosis on the I-V curve of the photovoltaic unit connected to the power converter that is in the z power converters and that has completed I-V scanning, and outputs a fault diagnosis report of the photovoltaic unit connected to the power converter that is in the z power converters and that has completed I-V scanning. According to embodiments of this application, a smoother and more accurate I-V curve can be obtained, thereby improving the precision of the I-V diagnosis. This has the higher applicability.

In this application, before the I-V scanning instruction is delivered, it may be automatically identified, in the preset time period in the day, whether the output current average value or the output current is in the I-V scanning current interval, and the I-V scanning instruction is delivered when all data meets a condition, to enable the power converter to perform effective I-V scanning. This can greatly reduce a quantity of times of invalid scanning performed by the power converter, thereby avoiding frequent fluctuations of power generation load of the photovoltaic system and an energy yield loss caused by the invalid scanning to the photovoltaic system. In addition, the precision of the I-V curve is improved, the availability, accuracy, and consistency of the I-V diagnosis are further improved, the identification manner is more accurate and flexible, the user does not need to determine the I-V scanning condition by him/herself, and the user operation is simpler. This avoids the low precision of the I-V diagnosis caused by the inaccurate determining of the user on the I-V scanning condition, and has the high applicability.

### BRIEF DESCRIPTION OF DRAWINGS

FIG. 1 is a diagram of an application scenario of a photovoltaic system according to this application;
FIG. 2 is a block diagram of a structure of a photovoltaic system according to this application;
FIG. 3 is a diagram of an output current-time curve of a photovoltaic unit when the photovoltaic unit is shaded according to this application;
FIG. 4 is a diagram of a working procedure in which a photovoltaic management apparatus delivers an I-V scanning instruction to a power converter according to this application;
FIG. 5 is a diagram of an intensity of irradiation-time curve of an environment in which a photovoltaic unit is located according to this application;
FIG. 6 is a diagram of an I-V curve and a P-V curve of a photovoltaic unit at different time points according to this application;
FIG. 7 is another block diagram of a structure of a photovoltaic system according to this application;
FIG. 8 is a schematic flowchart of an I-V diagnosis method for a photovoltaic management apparatus according to this application; and
FIG. 9 is another schematic flowchart of an I-V diagnosis method for a photovoltaic management apparatus according to this application.

### DESCRIPTION OF EMBODIMENTS

A photovoltaic system according to this application may be used in a large ground power plant, a mountain power plant, and a water-surface power plant. An I-V curve of a photovoltaic unit is scanned, and I-V diagnosis is performed on the I-V curve of the photovoltaic unit to identify a possible fault of the photovoltaic unit. In this way, operations and maintenance personnel of the photovoltaic system can perform operations and maintenance on the faulty photovoltaic unit. The photovoltaic system according to this application may be used in different application scenarios, for example, a photovoltaic power supply scenario and a solar-storage hybrid power supply scenario. In the photovoltaic power supply scenario and the solar-storage hybrid power supply scenario, the photovoltaic unit is a photovoltaic string and a power converter is a photovoltaic inverter, or the photovoltaic unit is a photovoltaic module and a power converter is a direct current converter (for example, a photovoltaic optimizer). The following uses the photovoltaic power supply scenario as an example.

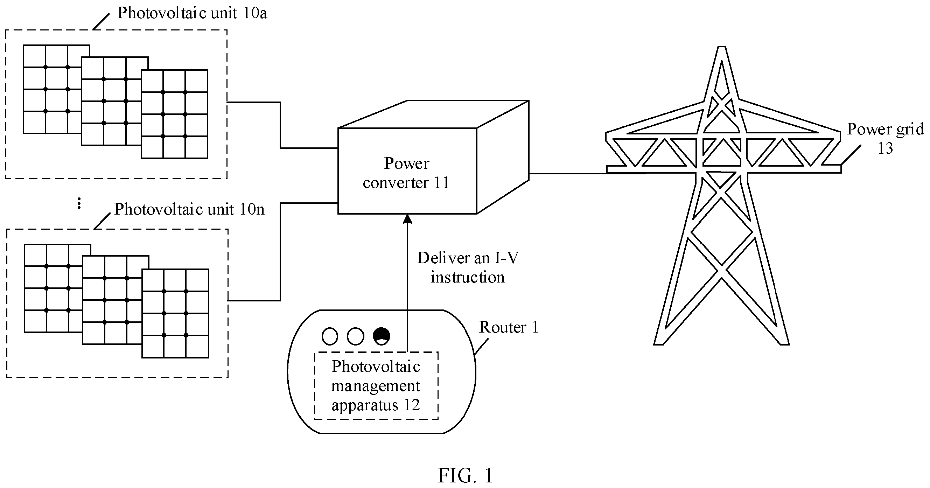

FIG. 1 is a diagram of an application scenario of a photovoltaic system according to this application. In the photovoltaic system shown in FIG. 1, an input end of a power converter 11 is configured to connect to a photovoltaic unit 10a to a photovoltaic unit 10n, and an output end of the power converter 11 is configured to connect to a power grid 13. For example, the photovoltaic unit 10a to the photovoltaic unit 10n are all photovoltaic strings, and the power converter 11 is a photovoltaic inverter. When the photovoltaic system works normally, the power converter 11 is configured to: convert direct currents input from the photovoltaic unit 10a to the photovoltaic unit 10n into alternating currents, and supply power to the power grid 13 based on the alternating currents. However, when any one of the photovoltaic unit 10a to the photovoltaic unit 10n is faulty, an energy yield loss is caused to the entire photovoltaic system. Therefore, a photovoltaic management apparatus 12 running in a router 1 usually identifies a fault of any photovoltaic unit in advance based on an I-V curve of the photovoltaic unit. The photovoltaic management apparatus 12 may deliver an I-V scanning instruction to the power converter 11 through communication, and specifically, deliver, in a preset time period in one day, the I-V scanning instruction to the power converter 11 in response to that output current average values of the photovoltaic unit 10a to the photovoltaic unit 10n at a current moment are in an I-V scanning current interval. A preset time period is a time period in which the photovoltaic unit 10a to the photovoltaic unit 10n are not shaded in the day. In this case, the power converter 11 is configured to: receive the I-V scanning instruction, perform I-V scanning on each of the photovoltaic unit 10a to the photovoltaic unit 10n to obtain an I-V curve of each photovoltaic string, and send the I-V curve of each photovoltaic string to the photovoltaic management apparatus 12 through communication. The photovoltaic management apparatus 12 is configured to: perform I-V diagnosis on the I-V curve of each photovoltaic string, and output a fault diagnosis report of each photovoltaic string.

According to embodiments of this application, before the I-V scanning instruction is delivered, it may be automatically identified, in the preset time period in the day, whether the output current average value or an output current is in the I-V scanning current interval, and the I-V scanning instruction is delivered when all data meets a condition, to enable the power converter 11 to perform effective I-V scanning. This can reduce a quantity of times of invalid scanning performed by the power converter 11, thereby avoiding frequent fluctuations of power generation load of the photovoltaic system and the energy yield loss caused by the invalid scanning to the photovoltaic system. This has high applicability.

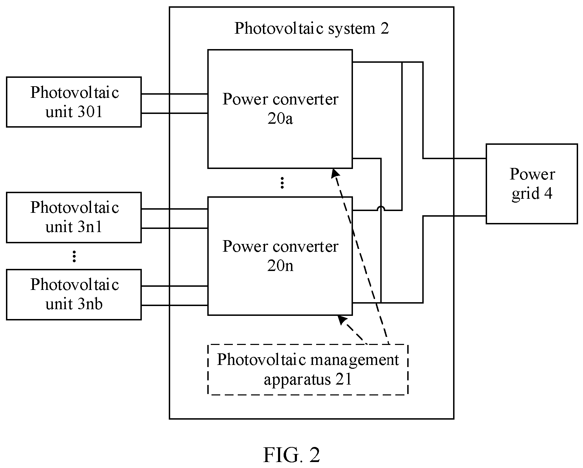

The following uses an example to describe, with reference to FIG. 2 to FIG. 7, a photovoltaic system according to this application and a working principle of the photovoltaic system.

FIG. 2 is a block diagram of a structure of a photovoltaic system according to this application. As shown in FIG. 2, the photovoltaic system 2 includes a power converter 20a to a power converter 20n and a photovoltaic management apparatus 21. The photovoltaic management apparatus 21 may be a virtual apparatus that runs on any router or server in the photovoltaic system 2. The photovoltaic management apparatus 21 is a software system that comprehensively monitors, controls, and manages the photovoltaic system 2 and internal components of the photovoltaic system 2. The photovoltaic management apparatus 21 may also be referred to as an intelligent photovoltaic management system. An input end of a power converter is configured to connect to a photovoltaic unit, an output end of the power converter is configured to connect to a power grid, and the power converter is configured to: perform power conversion on a direct current input by the photovoltaic unit, and output the converted current. For example, an input end of the power converter 20a is configured to connect to a photovoltaic unit 301, and an output end of the power converter 20a is configured to connect to a power grid 4; ...; and an input end of the power converter 20n is configured to connect to a photovoltaic unit 3n1 to a photovoltaic unit 3nb, and an output end of the power converter 20n is configured to connect to the power grid 4. Optionally, the photovoltaic system 2 may also include one power converter. For example, the photovoltaic system 2 includes the power converter 20a or the power converter 20n. In an embodiment, the power converter is an inverter, and the photovoltaic unit is a photovoltaic string. Optionally, the power converter is a direct current converter (for example, a photovoltaic optimizer), and the photovoltaic unit is a photovoltaic module. In this case, a photovoltaic inverter may be disposed between the power converter and the power grid 4. Optionally, the power converter is an inverter or a direct current converter, and the photovoltaic unit is a photovoltaic cell.

The photovoltaic management apparatus 21 delivers a control instruction to any one of the power converter 20a to the power converter 20n through communication. The control instruction includes an I-V scanning instruction, an I-V curve obtaining instruction, or another instruction.

When the input end of the power converter is configured to connect to one photovoltaic unit, the power converter 20a is used as an example for description, and the photovoltaic management apparatus 21 is configured to deliver, in a preset time period in one day, the I-V scanning instruction to the power converter 20a in response to that an output current of the photovoltaic unit 301 at a current moment is in an I-V scanning current interval. The preset time period includes a plurality of time periods or one continuous time period, the preset time period is a time period in which the photovoltaic unit 301 is not shaded in the day, and the current moment is in the preset time period in the day. An upper limit value of the I-V scanning current interval is less than a maximum output current of the photovoltaic unit, and a lower limit value of the I-V scanning current interval is greater than 0. The power converter 20a is configured to: receive the I-V scanning instruction, and perform I-V scanning on the photovoltaic unit 301, to obtain an I-V curve of the photovoltaic unit 301.

When the input end of the power converter is configured to connect to a plurality of photovoltaic units, the power converter 20n is used as an example for description, and the photovoltaic management apparatus 21 is configured to deliver, in a preset time period in one day, the I-V scanning instruction to the power converter 20n in response to that output current average values of the photovoltaic unit 3n1 to the photovoltaic unit 3nb at a current moment are in the I-V scanning current interval. The preset time period includes a plurality of time periods or one continuous time period, the preset time period is a time period in which the photovoltaic unit 3n1 to the photovoltaic unit 3nb are not shaded in the day, and the current moment is in the preset time period in the day. An upper limit value of the I-V scanning current interval is less than a maximum output current of the photovoltaic unit, and a lower limit value of the I-V scanning current interval is greater than 0. The power converter 20n is configured to: receive the I-V scanning instruction, and perform I-V scanning on the photovoltaic unit 3n1 to the photovoltaic unit 3nb, to obtain I-V curves of the photovoltaic unit 3n1 to the photovoltaic unit 3nb.

According to embodiments of this application, before the I-V scanning instruction is delivered, it may be automatically identified, in the preset time period in the day, whether the output current average value or the output current is in the I-V scanning current interval, and the I-V scanning instruction is delivered when all data meets a condition, to enable the power converter to perform effective I-V scanning. This can greatly reduce a quantity of times of invalid scanning performed by the power converter, thereby avoiding frequent fluctuations of power generation load of the photovoltaic system 2 and an energy yield loss caused by the invalid scanning to the photovoltaic system 2. In addition, precision of the I-V curve is improved, availability, accuracy, and consistency of I-V diagnosis are further improved, an identification manner is more accurate and flexible, a user does not need to determine an I-V scanning condition by him/herself, and a user operation is simpler. This avoids low precision of the I-V diagnosis caused by inaccurate determining of the user on the I-V scanning condition, and has high applicability.

In some feasible implementations, the photovoltaic management apparatus 21 is configured to display a scheduled scanning time window in response to a trigger operation of a scheduled scanning button in an I-V scanning interface of the photovoltaic management apparatus 21. The I-V scanning interface is a display interface that includes the scheduled scanning button and an instant scanning button. The I-V scanning interface may be a user interface of a router or a server that runs the photovoltaic management apparatus 21. Optionally, the I-V scanning interface may alternatively be a user interface of a terminal device that establishes a communication connection to a router or a server that runs the photovoltaic management apparatus 21. The scheduled scanning time window is a window in which the user sets scheduled scanning time for performing I-V scanning by the power converter. Further, the photovoltaic management apparatus 21 is configured to obtain the scheduled scanning time of the power converter in response to an input operation of the scheduled scanning time window. In this case, scheduled scanning is started. Still further, the photovoltaic management apparatus 21 is configured to deliver, in a preset time period in one day, the I-V scanning instruction to the power converter in response to that output current average values of the photovoltaic unit 3n1 to the photovoltaic unit 3nb at a current moment or an output current of the photovoltaic unit 301 at the current moment is in an I-V scanning current interval, and that the current moment is in scheduled scanning time. According to embodiments of this application, after scheduled scanning is started, it may be automatically identified, in the preset time period in the day, whether the output current average value or the output current is in the I-V scanning current interval and whether the current moment is in the scheduled scanning time, and the I-V scanning instruction is delivered when all data meets conditions, to enable the power converter to perform effective I-V scanning, thereby avoiding a large quantity of times of invalid scanning in an instant scanning manner, and making the user operation simpler.

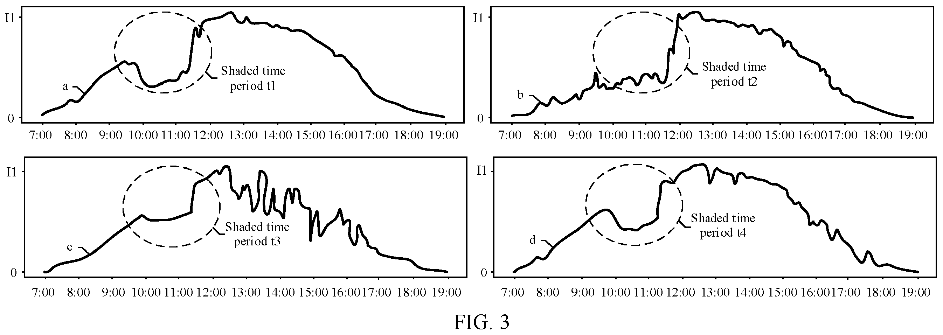

In some feasible implementations, when the photovoltaic unit in the photovoltaic system 2 is shaded by surrounding vegetation, buildings, and adjacent modules, output current curves of the photovoltaic unit may be shown in FIG. 3. A curve a, a curve b, a curve c, and a curve d in FIG. 3 are output current curves of a same photovoltaic unit in four days. When the photovoltaic unit is in shaded time periods (such as a shaded time period t1, a shaded time period t2, a shaded time period t3, and a shaded time period t4) marked in FIG. 3, that the output current of the photovoltaic unit is significantly reduced, and that an output power of the photovoltaic unit is also reduced with the reduction in the output current may be obtained. When the photovoltaic unit connected to the power converter is in the shaded time period, I-V scanning performed by the power converter on the photovoltaic unit may cause a decrease in the precision of the I-V curve, and further cause error diagnosis to a result of the I-V diagnosis performed by the photovoltaic management apparatus 21 based on the I-V curve. Therefore, before delivering the I-V scanning instruction to the power converter and performing the I-V diagnosis, the photovoltaic management apparatus 21 needs to determine whether the current moment is in an unshaded time period (namely, the preset time period) of the photovoltaic unit in the day. In this way, the photovoltaic unit is prevented from delivering the I-V scanning instruction in the unshaded time period in the day.

In some feasible implementations, the power converter 20a is used as an example for description. The photovoltaic management apparatus 21 is configured to perform curve fitting on output parameters of the photovoltaic unit 301 at various moments of each in n days before the current moment, to obtain a first output parameter curve of the photovoltaic unit 301 in each day. The first output parameter curve is an output parameter curve obtained when the photovoltaic unit 301 is shaded. The first output parameter curve includes the output parameters of the photovoltaic unit 301 at the various moments in each day, and the output parameters may be the same as or different from output parameters of the photovoltaic unit 301 at the various moments in each day before curve fitting is performed. An output parameter may be an output current or an output power. For example, when n is equal to 4 and the output parameter is the output current, first output parameter curves of the photovoltaic unit 301 in the four days are sequentially shown by the curve a, the curve b, the curve c, and the curve d in FIG. 3. In this case, the first output parameter curve is an output current curve. Optionally, when the output parameter is the output power, the first output parameter curve is an output power curve.

Further, the photovoltaic management apparatus 21 is configured to separately obtain differences between the output parameters of the photovoltaic unit 301 at the various moments in the first output parameter curve in each day and output parameters of moments that are in a second output parameter curve and that correspond to the various moments, to obtain output parameter differences of the photovoltaic unit 301 at the various moments in each day. The second output parameter curve is an output parameter curve obtained when the photovoltaic unit is not shaded, in other words, the second output parameter curve is a theoretical unshaded curve. The second output parameter curve includes the output parameters of the photovoltaic unit 301 at the various moments in the day. When the output parameter is the output current, the second output parameter curve is an output current curve. Optionally, when the output parameter is the output power, the second output parameter curve is an output power curve. The various moments in the first output parameter curve and the moments that are in the second output parameter curve and that correspond to the various moments are same moments in the day. For example, an output parameter at a moment 1 in the first output parameter curve is represented as Z1, and an output parameter at a moment 1 in the second output parameter curve is represented as Z2. An output parameter difference of the photovoltaic unit 301 at the moment 1 in the day may be represented as Z1-Z2 or Z2-Z1.

Further, the photovoltaic management apparatus 21 is configured to use, as output parameter loss rates of the photovoltaic unit 301 at the various moments in each day, ratios of absolute values of the output parameter differences of the photovoltaic unit 301 at the various moments in each day to the output parameters of the moments that are in the second output parameter curve and that correspond to the various moments. An absolute value of an output parameter difference may also be referred to as an output parameter loss amount. For example, an output parameter loss rate of the photovoltaic unit 301 at the moment 1 in the day may be represented as |Z2-Z1|/Z2.

Further, the photovoltaic management apparatus 21 is configured to: separately perform weighted summation on output parameter loss rates of the photovoltaic unit 301 at same moments in the n days, to obtain shading factors of the photovoltaic unit 301 at the various moments in the day, and in response to that a shading factor of the photovoltaic unit 301 at at least one moment in the day is greater than a preset shading factor threshold, determine, as a shaded time period of the photovoltaic unit 301 in the day, a sum of a period of time in which the at least one moment in the day is located. The preset shading factor threshold may be a threshold set by the user or a threshold configured by the photovoltaic management apparatus 21 for the photovoltaic unit. A time period in which any one of the at least one moment is located may be from a time point obtained by subtracting m minutes from the moment to a time point obtained by adding the m minutes to the moment, and may be represented as from (any moment-m minutes) to (any moment+m minutes). The m minutes may be determined by temporal resolution. For example, the m minutes may be 15 minutes or 30 minutes. This is not specifically limited herein. For example, when the output parameters of the various moments of each in the n days are output parameters of various moments in each of three days, an output parameter loss rate at the moment 1 in a first day is represented as X1, and a weighting coefficient of the first day is represented as W1; an output parameter loss rate at the moment 1 in a second day is represented as X2, and a weighting coefficient of the second day is represented as W2; and an output parameter loss rate at the moment 1 in a third day is represented as X3, and a weighting coefficient of the third day is represented as W3. A shading factor of the photovoltaic unit 301 at the moment 1 in the day is X1*W1+X2*W2+X3*W3, where W1+W2+W3 is equal to 1. A weighting coefficient of one day, in the n days, closer to I-V scanning start time of the scheduled scanning time is larger, and a weighting coefficient of one day, in the n days, farther away from the I-V scanning start time is smaller. For example, W1<W2<W3.

Further, the photovoltaic management apparatus 21 is configured to remove the shaded time period of the photovoltaic unit 301 in the day from an irradiation time period in the day, to output the preset time period in the day. In other words, the preset time period is a time period in which the photovoltaic unit 301 is not shaded in the day (which may be referred to as the unshaded time period for short). In addition, the unshaded time period is a sum of other time periods in the irradiation time period other than the shaded time period. The shaded time period is a time period in which the photovoltaic unit 301 is shaded. The irradiation time period is a time period in which an intensity of irradiation is greater than 0 or an intensity of irradiation in the day is specific. The irradiation time period may also be referred to as a daytime time period, and the specific intensity of irradiation may be a parameter set by the user or a parameter configured by the photovoltaic management apparatus 21. For example, the irradiation time period may be from 7:00 to 19:00 in the day, the shaded time period may be from 9:30 to 12:30 in the day, and the preset time period includes at least one time period of 7:00 to 9:30 and 12:30 to 19:00 in the day. This is not specifically limited herein.

Still further, the photovoltaic management apparatus 21 is configured to deliver the I-V scanning instruction to the power converter 20a in response to that a current moment is in a preset time period in one day, and that an output current of the photovoltaic unit 301 at the current moment is in an I-V scanning current interval. According to embodiments of this application, the preset time period (namely, the unshaded time period) in the day may be automatically identified, so that the power converter 20a is prevented from performing I-V scanning in the time period in which the photovoltaic unit 301 is shaded, and precision of the I-V curve obtained by performing I-V scanning by the power converter 20a is improved.

In some feasible implementations, the power converter 20n is used as an example for description. The photovoltaic management apparatus 21 is configured to perform curve fitting on output parameter average values of the photovoltaic unit 3n1 to the photovoltaic unit 3nb at various moments of each in n days before the current moment, to obtain a first output parameter curve of the photovoltaic unit 3n1 to the photovoltaic unit 3nb in each day. The first output parameter curve includes the output parameter average values of the photovoltaic unit 3n1 to the photovoltaic unit 3nb at the various moments in each day, and the output parameter average values may be the same as or different from output parameter average values of the photovoltaic unit 3n1 to the photovoltaic unit 3nb at the various moments in each day before curve fitting is performed. An output parameter may be an output current or an output power.

Further, the photovoltaic management apparatus 21 is configured to separately obtain differences between the output parameter average values of the photovoltaic unit 3n1 to the photovoltaic unit 3nb at the various moments in the first output parameter curve in each day and output parameter average values of moments that are in a second output parameter curve and that correspond to the various moments, to obtain output parameter average value differences of the photovoltaic unit 3n1 to the photovoltaic unit 3nb at the various moments in each day. The second output parameter curve is an output parameter curve obtained when the photovoltaic unit 3n1 to the photovoltaic unit 3nb are not shaded, and the second output parameter curve includes the output parameter average values of the photovoltaic unit 3n1 to the photovoltaic unit 3nb at the various moments in the day. The various moments in the first output parameter curve and the moments that are in the second output parameter curve and that correspond to the various moments are same moments in the day. Further, the photovoltaic management apparatus 21 is configured to use, as output parameter average value loss rates of the photovoltaic unit 3n1 to the photovoltaic unit 3nb at the various moments in each day, ratios of absolute values of the output parameter average value differences of the photovoltaic unit 3n1 to the photovoltaic unit 3nb at the various moments in each day to the output parameter average values of the moments that are in the second output parameter curve and that correspond to the various moments.

Further, the photovoltaic management apparatus 21 is configured to: separately perform weighted summation on output parameter average value loss rates of the photovoltaic unit 3n1 to the photovoltaic unit 3nb at same moments in the n days, to obtain shading factors of the photovoltaic unit 3n1 to the photovoltaic unit 3nb at the various moments in the day, and in response to that shading factors of the photovoltaic unit 3n1 to the photovoltaic unit 3nb at at least one moment in the day are greater than a preset shading factor threshold, use, as shaded time periods of the photovoltaic unit 3n1 to the photovoltaic unit 3nb in the day, a sum of a period of time in which the at least one moment in the day is located.

Further, the photovoltaic management apparatus 21 is configured to remove the shaded time periods of the photovoltaic unit 3n1 to the photovoltaic unit 3nb in the day from irradiation time periods of the photovoltaic unit 3n1 to the photovoltaic unit 3nb in the day, to output the preset time period in the day. In other words, the preset time period is a time period in which the photovoltaic unit 3n1 to the photovoltaic unit 3nb are not shaded in the day (which may be referred to as the unshaded time period for short). In addition, the unshaded time period is a sum of other time periods in the irradiation time period other than the shaded time period. The shaded time period is a time period in which the photovoltaic unit 3n1 to the photovoltaic unit 3nb are shaded.

Still further, the photovoltaic management apparatus 21 is configured to deliver the I-V scanning instruction to the power converter 20n in response to that a current moment is in a preset time period in one day, and that output current average values of the photovoltaic unit 3n1 to the photovoltaic unit 3nb at the current moment are in an I-V scanning current interval. According to embodiments of this application, the preset time period (namely, the unshaded time period) in the day may be automatically identified, so that the power converter 20n is prevented from performing I-V scanning in the time period in which the photovoltaic unit 3n1 to the photovoltaic unit 3nb are shaded, and precision of the I-V curves obtained by performing I-V scanning by the power converter 20n is improved.

In some feasible implementations, when the photovoltaic system 2 is in a high irradiation scenario, the power converter cannot perform I-V scanning or obtain a complete I-V curve. Consequently, availability of performing the I-V diagnosis by the photovoltaic management apparatus 21 based on the I-V curve is severely affected. However, when the photovoltaic system 2 is in a low irradiation scenario, factors such as an environmental irradiation fluctuation and a sampling error may also affect accuracy and consistency of the I-V diagnosis performed by the photovoltaic management apparatus 21. Therefore, before delivering the I-V scanning instruction to the power converter, the photovoltaic management apparatus 21 determines the intensity of irradiation received, at the current moment, by the photovoltaic unit connected to the power converter. Specifically, the photovoltaic management apparatus 21 is configured to deliver, in the preset time period in the day, the I-V scanning instruction to the power converter in response to that intensities of irradiation received by the photovoltaic unit 3n1 to the photovoltaic unit 3nb at the current moment or the intensity of irradiation received by the photovoltaic unit 301 at the current moment are/is in a preset intensity interval of irradiation. An upper limit value of the preset intensity interval of irradiation may be referred to as a preset upper limit intensity of irradiation for short, and a lower limit value of the preset intensity interval of irradiation may be referred to as a preset lower limit intensity of irradiation for short.

According to embodiments of this application, it may be automatically identified, in the preset time period in the day, whether the intensity of irradiation is in the preset intensity interval of irradiation, and the I-V scanning instruction is delivered when the intensity of irradiation is in the preset intensity interval of irradiation, to enable the power converter to perform I-V scanning. Therefore, the accuracy of the I-V curve is improved, and the availability, accuracy, and consistency of the I-V diagnosis are further improved.

In some feasible implementations, the photovoltaic management apparatus 21 is configured to deliver, in the preset time period in the day, the I-V scanning instruction to the power converter in response to that the current moment is in the scheduled scanning time, and that the intensities of irradiation received by the photovoltaic unit 3n1 to the photovoltaic unit 3nb at the current moment or the intensity of irradiation received by the photovoltaic unit 301 at the current moment are/is in a preset intensity interval of irradiation. According to embodiments of this application, after scheduled scanning is started, it may be automatically identified, in the preset time period in the day, whether the intensity of irradiation is in the preset intensity interval of irradiation and whether the current moment is in the scheduled scanning time, and the I-V scanning instruction is delivered when all data meets conditions, to enable the power converter to perform I-V scanning, thereby avoiding the large quantity of times of invalid scanning in the instant scanning manner, and improving the precision of the I-V curve. This further improves the availability, accuracy, and consistency of the I-V diagnosis, and makes the user operation simpler.

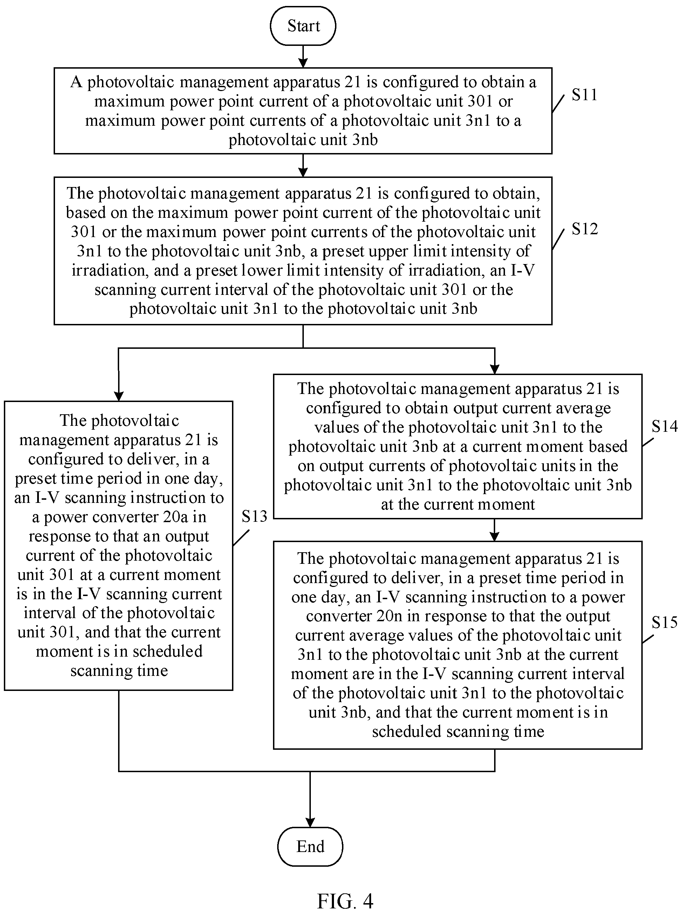

Optionally, in some feasible implementations, when the photovoltaic management apparatus 21 fails to obtain, in real time, the accurate intensity of irradiation received by the photovoltaic unit at the current moment, the photovoltaic management apparatus 21 is configured to perform step S11 to step S15 shown in FIG. 4 to deliver the I-V scanning instruction to the power converter. In this case, running data further includes the output current, at the current moment, of the photovoltaic unit connected to the power converter, and the I-V scanning condition further includes the I-V scanning current interval of the photovoltaic unit connected to the power converter.

Step S11: The photovoltaic management apparatus 21 is configured to obtain a maximum power point current of the photovoltaic unit 301 or maximum power point currents of the photovoltaic unit 3n1 to the photovoltaic unit 3nb.

The maximum power point current may also be referred to as a maximum power point tracking (maximum power point tracking, MPPT) current, and the maximum power point current is a factory-configured performance parameter of the photovoltaic unit.

Step S12: The photovoltaic management apparatus 21 is configured to obtain, based on the maximum power point current of the photovoltaic unit 301 or the maximum power point currents of the photovoltaic unit 3n1 to the photovoltaic unit 3nb, the preset upper limit intensity of irradiation, and the preset lower limit intensity of irradiation, the I-V scanning current interval of the photovoltaic unit 301 or the photovoltaic unit 3n1 to the photovoltaic unit 3nb.

The photovoltaic management apparatus 21 may calculate the upper limit value and the lower limit value of the I-V scanning current interval according to the following formula (1).
I *= Iₘₚ* × *Iᵣᵣ*/1000 formula (1).

*Iₘₚ* represents the maximum power point current, and *Iᵣᵣ* represents the preset upper limit intensity of irradiation or the preset lower limit intensity of irradiation. When *Iᵣᵣ* represents the preset upper limit intensity of irradiation, I represents the upper limit value of the I-V scanning current interval. When *Iᵣᵣ* represents the preset lower limit intensity of irradiation, I represents the lower limit value of the I-V scanning current interval.

Step S13: The photovoltaic management apparatus 21 is configured to deliver, in the preset time period in the day, the I-V scanning instruction to the power converter 20a in response to that the output current of the photovoltaic unit 301 at the current moment is in the I-V scanning current interval of the photovoltaic unit 301, and that the current moment is in the scheduled scanning time.

When the output current of the photovoltaic unit 301 at the current moment is in the I-V scanning current interval, it may be deduced according to the foregoing formula (1) that the intensity of irradiation received by the photovoltaic unit 301 at the current moment is in the preset intensity interval of irradiation.

Step S14: The photovoltaic management apparatus 21 is configured to obtain the output current average values of the photovoltaic unit 3n1 to the photovoltaic unit 3nb at the current moment based on output currents of the photovoltaic unit 3n1 to the photovoltaic unit 3nb at the current moment.

Step S15: The photovoltaic management apparatus 21 is configured to deliver, in the preset time period in the day, the I-V scanning instruction to the power converter 20n in response to that the output current average values of the photovoltaic unit 3n1 to the photovoltaic unit 3nb at the current moment are in the I-V scanning current interval of the photovoltaic unit 3n1 to the photovoltaic unit 3nb, and that the current moment is in the scheduled scanning time.

When the output current average values of the photovoltaic unit 3n1 to the photovoltaic unit 3nb at the current moment are in the I-V scanning current interval, it may be deduced according to the foregoing formula (1) that the intensities of irradiation received by the photovoltaic unit 3n1 to the photovoltaic unit 3nb at the current moment are in the preset intensity interval of irradiation.

Optionally, when the power converter is configured to connect to the plurality of photovoltaic units, the photovoltaic management apparatus 21 is configured to deliver, in the preset time period in the day, the I-V scanning instruction to the power converter 20n in response to that an output current of any one of the photovoltaic unit 3n1 to the photovoltaic unit 3nb at the current moment is in the I-V scanning current interval, and that the current moment is in the scheduled scanning time.

According to embodiments of this application, when the accurate intensity of irradiation is not obtained in real time, it may be automatically identified, in the preset time period in the day, whether the output current or the output current average value is in the I-V scanning current interval, to indirectly determine whether the intensity of irradiation is in the preset intensity interval of irradiation. In addition, it may be automatically identified whether the current moment is in the scheduled scanning time, and the I-V scanning instruction is delivered when all data meets conditions, to enable the power converter to perform I-V scanning, thereby improving the precision of the I-V curve. This further improves the availability, accuracy, and consistency of the I-V diagnosis, and makes the identification manner more accurate and flexible.

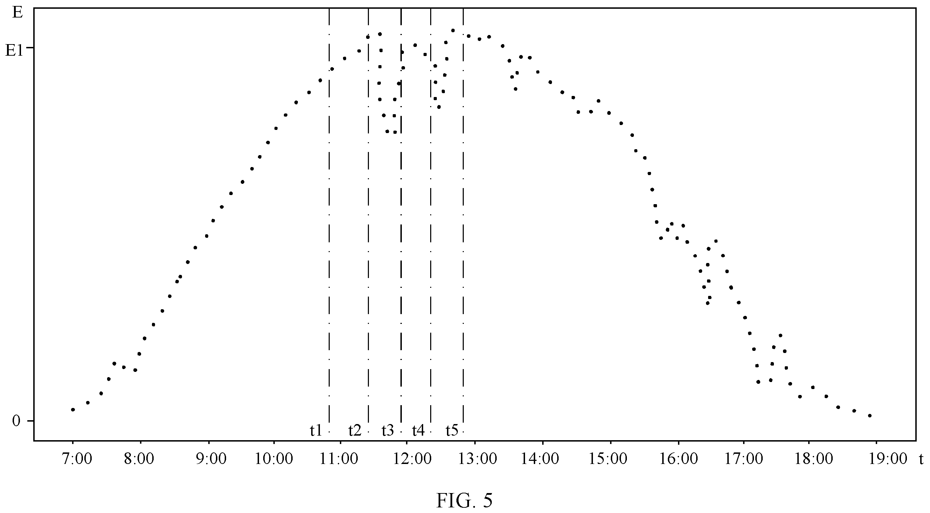

In some feasible implementations, when the intensity of irradiation received by the photovoltaic unit frequently fluctuates in short time, for example, an intensity of irradiation received by the photovoltaic unit-time curve may be shown in FIG. 5, in a time period from t1 to t2, the intensity of irradiation changes smoothly, and in a time period from t3 to t5, the intensity of irradiation changes and oscillates.

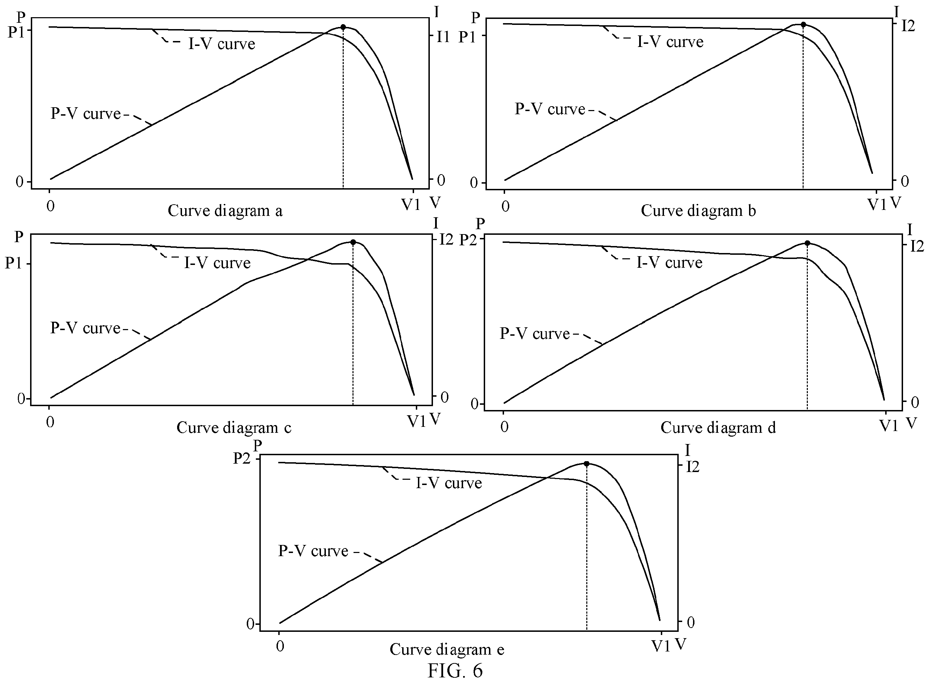

An I-V curve and a P-V curve of the photovoltaic unit at a time point t1 may be shown in a curve diagram a in FIG. 6, and an I-V curve and a P-V curve of the photovoltaic unit at a time point t2 may be shown in a curve diagram b in FIG. 6. It may be obtained from the curve diagram a and the curve diagram b that the I-V curves and the P-V curves of the photovoltaic unit are smooth when the intensity of irradiation changes smoothly, and an I-V diagnosis result of the photovoltaic unit is normal. An I-V curve and a P-V curve of the photovoltaic unit at a time point t3 may be shown in a curve diagram c in FIG. 6. The I-V curve and the P-V curve of the photovoltaic unit are distorted, and an I-V diagnosis result of the photovoltaic unit is faulty. For example, a current mismatch occurs between components of the photovoltaic unit, and the current mismatch between the components is caused by factors such as that the component is shaded, that there is dust on the component, and that output currents of the components are inconsistent. An I-V curve and a P-V curve of the photovoltaic unit at a time point t4 may be shown in a curve diagram d in FIG. 6. The I-V curve and the P-V curve of the photovoltaic unit are distorted, and an I-V diagnosis result of the photovoltaic unit is faulty. For example, a current output of a component of the photovoltaic unit is abnormal, and the abnormal current output of the component is caused by factors such as that the component is shaded, that glass in the component is broken, and the component generates a hot spot. An I-V curve and a P-V curve of the photovoltaic unit at a time point t5 may be shown in a curve diagram e in FIG. 6. The I-V curve and the P-V curve of the photovoltaic unit are smooth, and an I-V diagnosis result of the photovoltaic unit is normal. It may be obtained from the curve diagram c, the curve diagram d, and the curve diagram e in FIG. 6 that when the intensity of radiation changes and oscillates, the I-V curves and the P-V curves of the photovoltaic unit are distorted to different degrees, and some I-V diagnosis results of the photovoltaic unit are faulty.

According to embodiments corresponding to FIG. 5 and FIG. 6, it may be obtained that when an intensity of radiation of an environment in which the photovoltaic unit is located frequently fluctuates in short time, I-V curves of a same photovoltaic unit at two consecutive time points may be inconsistent or even distorted. As a result, I-V diagnosis results of the same photovoltaic unit at the two consecutive time points may be different. This severely affects accuracy and consistency of an I-V diagnosis algorithm. Therefore, to avoid impact of the fluctuation of the intensity of radiation on the I-V diagnosis results of the same photovoltaic unit, the photovoltaic management apparatus 21 predicts, in advance, stability of the environment in which the photovoltaic unit is located.

In some feasible implementations, the power converter 20a is used as an example for description. The photovoltaic management apparatus 21 is configured to obtain a current standard deviation of the photovoltaic unit 301 in the m minutes based on an output current of the photovoltaic unit 301 in each of the m minutes before the current moment and the output current of the photovoltaic unit 301 at the current moment. The current standard deviation represents a current fluctuation of the photovoltaic unit in the m minutes, and the current fluctuation of the photovoltaic unit in the m minutes may represent an intensity fluctuation of irradiation received by the photovoltaic unit. During specific implementation, the photovoltaic management apparatus 21 is configured to separately normalize, based on the maximum power point current of the photovoltaic unit 301, the output current of the photovoltaic unit 301 in each of the m minutes before the current moment, to obtain a normalized output current value of the photovoltaic unit 301 in each minute. Further, the photovoltaic management apparatus 21 is configured to normalize the output current of the photovoltaic unit 301 at the current moment based on the maximum power point current, to obtain a normalized output current value of the photovoltaic unit 301 at the current moment. Still further, the photovoltaic management apparatus 21 is configured to: separately obtain a difference between the normalized output current value of the photovoltaic unit 301 in each minute and the normalized output current value at the current moment, to obtain a current residual of the photovoltaic unit 301 in each minute, and perform standardized processing on the current residual of the photovoltaic unit 301 in each minute, to obtain the current standard deviation of the photovoltaic unit 301 in the m minutes. Optionally, the photovoltaic management apparatus 21 is configured to: perform linear fitting on the normalized output current value of the photovoltaic unit 301 in each minute, to obtain a first current trend curve of the photovoltaic unit 301 in the m minutes, and separately obtain a difference between a normalized output current value in the first current trend curve in each minute and the normalized output current value of the photovoltaic unit 301 at the current moment, to obtain the current residual of the photovoltaic unit 301 in each minute and perform standardization processing on the current residual. In this way, the current standard deviation of the photovoltaic unit in m minutes is obtained. The normalized output current value in the first current trend curve in each minute may be the same as or different from a normalized output current value in each minute before linear fitting is performed. According to embodiments of this application, the current standard deviation that represents current fluctuations of the photovoltaic unit in the m minutes may be collected, to determine whether an intensity fluctuation of irradiation of the environment in which the photovoltaic unit is located is relatively stable, and further predict, in advance, the stability of the environment in which the photovoltaic unit is located.

Further, the photovoltaic management apparatus 21 is configured to deliver, in the preset time period in the day, the I-V scanning instruction to the power converter 20a in response to that the output current of the photovoltaic unit 301 at the current moment is in the I-V scanning current interval, and that the current standard deviation is in a preset current standard deviation interval. The preset current standard deviation interval may be an interval set by the user, or an interval determined by using a performance parameter of the photovoltaic unit and station irradiation data of the photovoltaic system 2. When the current standard deviation is in the preset current standard deviation interval, it may indicate that the intensity of irradiation received by the photovoltaic unit is stable.

According to embodiments of this application, it may be automatically identified, in the preset time period in the day, whether the output current average value or the output current is in the I-V scanning current interval and whether the current standard deviation is in the preset current standard deviation interval, and the I-V scanning instruction is delivered when all data meets conditions, to enable the power converter 20a to perform I-V scanning. Therefore, the precision of the I-V curve, and the availability, accuracy, and consistency of the I-V diagnosis are improved, an I-V diagnosis error caused by environmental stability is effectively avoided, and this has higher applicability.

In some feasible implementations, the photovoltaic management apparatus 21 is configured to obtain a current standard deviation of the photovoltaic unit 3n1 to the photovoltaic unit 3nb in the m minutes based on output current average values of the photovoltaic unit 3n1 to the photovoltaic unit 3nb in each of the m minutes before the current moment and the output current average values of the photovoltaic unit 3n1 to the photovoltaic unit 3nb at the current moment. The current standard deviation represents a current fluctuation of the photovoltaic unit 3n1 to the photovoltaic unit 3nb in the m minutes, and the current fluctuation of the photovoltaic unit 3n1 to the photovoltaic unit 3nb in the m minutes may represent an intensity fluctuation of irradiation received by the photovoltaic unit 3n1 to the photovoltaic unit 3nb.

During specific implementation, the photovoltaic management apparatus 21 is configured to separately normalize, based on the maximum power point currents of the photovoltaic unit 3n1 to the photovoltaic unit 3nb, the output current average values of the photovoltaic unit 3n1 to the photovoltaic unit 3nb in each of the m minutes before the current moment, to obtain the normalized output current average values of the photovoltaic unit 3n1 to the photovoltaic unit 3nb in each minute. Because the plurality of photovoltaic units connected to the power converter are usually photovoltaic units of a same type, the maximum power point currents of the photovoltaic unit 3n1 to the photovoltaic unit 3nb are the same. Further, the photovoltaic management apparatus 21 is configured to normalize the output current average values of the photovoltaic unit 3n1 to the photovoltaic unit 3nb at the current moment based on the maximum power point currents, to obtain the normalized output current average values of the photovoltaic unit 3n1 to the photovoltaic unit 3nb at the current moment. Still further, the photovoltaic management apparatus 21 is configured to: separately obtain a difference between the normalized output current average values of the photovoltaic unit 3n1 to the photovoltaic unit 3nb in each minute and the normalized output current average values at the current moment, to obtain current residuals of the photovoltaic unit 3n1 to the photovoltaic unit 3nb in each minute, and perform standardized processing on the current residuals of the photovoltaic unit 3n1 to the photovoltaic unit 3nb in each minute, to obtain the current standard deviation of the photovoltaic unit 3n1 to the photovoltaic unit 3nb in the m minutes. Optionally, the photovoltaic management apparatus 21 is configured to: perform linear fitting on the normalized output current average values of the photovoltaic unit 3n1 to the photovoltaic unit 3nb in each minute, to obtain a second current trend curve of the photovoltaic unit 3n1 to the photovoltaic unit 3nb in the m minutes, and separately obtain a difference between a normalized output current average value in the second current trend curve in each minute and the normalized output current average values of the photovoltaic unit 3n1 to the photovoltaic unit 3nb at the current moment, to obtain the current residuals of the photovoltaic unit 3n1 to the photovoltaic unit 3nb in each minute and perform standardization processing on the current residuals. In this way, the current standard deviation of the photovoltaic unit 3n1 to the photovoltaic unit 3nb in the m minutes is obtained. The normalized output current average value in the second current trend curve in each minute may be the same as or different from a normalized output current average value in each minute before linear fitting is performed. According to embodiments of this application, the current standard deviation that represents current fluctuations of the photovoltaic unit in the m minutes may be collected, to determine whether an intensity fluctuation of irradiation of the environment in which the photovoltaic unit is located is relatively stable, and further predict, in advance, the stability of the environment in which the photovoltaic unit is located.

Further, the photovoltaic management apparatus 21 is configured to deliver, in the preset time period in the day, the I-V scanning instruction to the power converter 20n in response to that the output current average values of the photovoltaic unit 3n1 to the photovoltaic unit 3nb at the current moment are in the I-V scanning current interval, and that the current standard deviation is in a preset current standard deviation interval. When the current standard deviation is in the preset current standard deviation interval, it may indicate that intensities of irradiation received by the plurality of photovoltaic units are stable.

According to embodiments of this application, it may be automatically identified, in the preset time period in the day, whether the output current average value or the output current is in the I-V scanning current interval and whether the current standard deviation is in the preset current standard deviation interval, and the I-V scanning instruction is delivered when all data meets conditions, to enable the power converter 20n to perform I-V scanning. Therefore, the precision of the I-V curve, and the availability, accuracy, and consistency of the I-V diagnosis are improved, an I-V diagnosis error caused by environmental stability is effectively avoided, and this has higher applicability.

Optionally, in some feasible implementations, the photovoltaic management apparatus 21 is further configured to: obtain, based on an output current of any one of the photovoltaic unit 3n1 to the photovoltaic unit 3nb in each of the m minutes before the current moment and an output current of the photovoltaic unit at the current moment, a current standard deviation of the photovoltaic unit in the m minutes, and further determine whether to deliver the I-V scanning instruction to the power converter 20n. For details, refer to a process in which the photovoltaic management apparatus 21 determines, based on the current standard deviation of the photovoltaic unit 301 in the m minutes, whether to deliver the I-V scanning instruction to the power converter 20a. Details are not described herein again.

In some feasible implementations, the photovoltaic management apparatus 21 is configured to deliver, in the preset time period in the day, the I-V scanning instruction to the power converter in response to that intensities of irradiation received by the photovoltaic unit 3n1 to the photovoltaic unit 3nb at the current moment or the intensity of irradiation received by the photovoltaic unit 301 at the current moment are/is in a preset intensity interval of irradiation, and that a current standard deviation of the photovoltaic unit 301 or the photovoltaic unit 3n1 to the photovoltaic unit 3nb in the m minutes is in a preset current standard deviation interval. According to embodiments of this application, it may be automatically identified, in the preset time period in the day, whether the intensity of irradiation is in the preset intensity interval of irradiation and whether the current standard deviation is in the preset current standard deviation interval, and the I-V scanning instruction is delivered when all data meets conditions. Therefore, the precision of the I-V curve, and the availability, accuracy, and consistency of the I-V diagnosis are improved, an I-V diagnosis error caused by environmental stability is effectively avoided, and this has higher applicability.

In some feasible implementations, the photovoltaic management apparatus 21 is configured to deliver, in the preset time period in the day, the I-V scanning instruction to the power converter in response to that the current moment is in the scheduled scanning time, that intensities of irradiation received by the photovoltaic unit 3n1 to the photovoltaic unit 3nb at the current moment or the intensity of irradiation received by the photovoltaic unit 301 at the current moment are/is in a preset intensity interval of irradiation, and that a current standard deviation of the photovoltaic unit 301 or the photovoltaic unit 3n1 to the photovoltaic unit 3nb in the m minutes is in a preset current standard deviation interval. Optionally, the photovoltaic management apparatus 21 is configured to deliver, in the preset time period in the day, the I-V scanning instruction to the power converter in response to that the current moment is in the scheduled scanning time, that the output current of the photovoltaic unit 301 at the current moment or the output current average values of the photovoltaic unit 3n1 to the photovoltaic unit 3nb at the current moment are in the I-V scanning current interval, and that a current standard deviation of the photovoltaic unit 301 or the photovoltaic unit 3n1 to the photovoltaic unit 3nb in the m minutes is in a preset current standard deviation interval. According to embodiments of this application, after scheduled scanning is started, it may be automatically identified, whether the current moment is in the scheduled scanning time, whether the intensity of irradiation is in the preset intensity interval of irradiation or the output current or the output current average value is in the I-V scanning current interval, and whether the current standard deviation is in the preset current standard deviation interval, and the I-V scanning instruction is delivered when all data meets conditions. Therefore, the precision of the I-V curve, and the availability, accuracy, and consistency of the I-V diagnosis are improved, an I-V diagnosis error caused by environmental stability is effectively avoided, and this makes the user operation simpler.

In some feasible implementations, the photovoltaic management apparatus 21 is configured to deliver the I-V scanning instruction to the power converter in response to at least two of that the current moment is in the preset time period in the day, that the output current of the photovoltaic unit 301 at the current moment or the output current average values of the photovoltaic unit 3n1 to the photovoltaic unit 3nb at the current moment are in the I-V scanning current interval, that intensities of irradiation received by the photovoltaic unit 3n1 to the photovoltaic unit 3nb at the current moment or the intensity of irradiation received by the photovoltaic unit 301 at the current moment are/is in a preset intensity interval of irradiation, that a current standard deviation of the photovoltaic unit 301 or the photovoltaic unit 3n1 to the photovoltaic unit 3nb in the m minutes is in a preset current standard deviation interval, and that the current moment is in the scheduled scanning time. In embodiments of this application, after scheduled scanning is started, an appropriate I-V scanning time point (for example, the foregoing current moment) may be automatically identified from the scheduled scanning time, and an operation is more flexible.

In some feasible implementations, when a large quantity of power converters in the photovoltaic system 2 perform I-V scanning at a same moment, short-term energy yield of the photovoltaic system 2 is greatly reduced. Consequently, an output parameter curve of the photovoltaic system 2 fluctuates greatly, resulting in an increase in a power generation fluctuation of the photovoltaic system 2 and poor user experience. Therefore, the photovoltaic management apparatus 21 limits a quantity of power converters that perform I-V scanning at a same moment in the photovoltaic system 2. During specific implementation, the photovoltaic management apparatus 21 is configured to deliver the I-V scanning instruction to y power converters in x power converters in response to that output current average values, at the current moment, of the plurality of photovoltaic units connected to each of the x power converters in the power converter 20a to the power converter 20n are in the I-V scanning current interval, or that the output current, at the current moment, of the photovoltaic unit connected to each power converter is in the I-V scanning current interval. y is an upper limit quantity of power converters that perform I-V scanning at the same moment, and the upper limit quantity is a value obtained after a product of an energy yield fluctuation amplitude of the photovoltaic system 2 and a quantity of power converters 20a to 20n is rounded down or rounded up. The energy yield fluctuation amplitude is an amplitude in which the energy yield of the photovoltaic system 2 fluctuates in a period of time. For example, the energy yield fluctuation amplitude is less than or equal to 20%.

According to embodiments of this application, the upper limit quantity of power converters that perform I-V scanning at the same moment in the photovoltaic system 2 may be limited, so that the power generation fluctuation caused by I-V scanning performed by the power converter to the photovoltaic system 2 is suppressed. This reduces impact of the photovoltaic system 2 on stability of a power grid due to a large power generation fluctuation, and has the high applicability.

In some feasible implementations, the photovoltaic management apparatus 21 is configured to deliver, in the preset time period in the day, the I-V scanning instruction to y power converters in x power converters in response to at least one of that output current average values, at the current moment, of the plurality of photovoltaic units connected to each of the x power converters or the output current of the photovoltaic unit at the current moment is in the I-V scanning current interval, that an intensity of irradiation received, at the current moment, by the photovoltaic unit connected to each power converter is in a preset intensity interval of irradiation, that a current standard deviation, in the m minutes, of the photovoltaic unit connected to each power converter is in a preset current standard deviation interval, and that the current moment is in the scheduled scanning time. According to embodiments of this application, the power generation fluctuation caused by I-V scanning performed by the power converter to the photovoltaic system 2 is suppressed. This reduces impact of the photovoltaic system 2 on stability of a power grid due to a large power generation fluctuation.

In some feasible implementations, the photovoltaic management apparatus 21 is configured to obtain, in response to that z power converters in the plurality of power converters have completed I-V scanning on photovoltaic units connected to the z power converters, or a time point at which any one of z power converters performs I-V scanning reaches I-V scanning end time, an I-V curve of a photovoltaic unit connected to a power converter that is in the z power converters and that has completed I-V scanning. For example, the I-V scanning end time may be the same as or different from end time of the scheduled scanning time. The z power converters may be the same as or different from the y power converters. It may be understood that, after the I-V scanning end time is reached, all of the z power converters have completed I-V scanning; or some of the z power converters have completed I-V scanning, and the other part of the z power converters have not completed I-V scanning.

Further, the photovoltaic management apparatus 21 is configured to: perform I-V diagnosis on the I-V curve of the photovoltaic unit connected to the power converter that is in the z power converters and that has completed I-V scanning, and output a fault diagnosis report of the photovoltaic unit connected to the power converter that is in the z power converters and that has completed I-V scanning. A specific manner of the I-V diagnosis is not limited herein. The fault diagnosis report includes a fault that exists in the photovoltaic unit connected to the power converter, and at least one of the preset time period, the I-V scanning current interval, the preset intensity interval of irradiation, the preset current standard deviation, and the scheduled scanning time. The fault that exists in the photovoltaic unit may be at least one of an open circuit, shading, a crack, a hot spot, dust accumulation, and potential induced degradation (potential induced degradation, PID) of the photovoltaic unit. In addition, the fault diagnosis report indicates operations and maintenance personnel of the photovoltaic system 2 to perform operations and maintenance on the faulty photovoltaic unit.

According to embodiments of this application, a smoother and more accurate I-V curve can be obtained, thereby improving the precision of the I-V diagnosis. This has the higher applicability.

In some feasible implementations, power converters that have completed I-V scanning are all or some of the z power converters. This is not specifically limited herein. When the power converters that have completed the I-V scanning are the some of the z power converters, the photovoltaic management apparatus 21 is configured to output a scheduled scanning result. The scheduled scanning result indicates that the other part of the z power converters do not perform I-V scanning in the scheduled scanning time, in other words, the other part of power converters that meet the I-V scanning condition are not found in the scheduled scanning time. In this case, the other part of the z power converters that have not completed I-V scanning may perform I-V scanning in next scheduled scanning. For a specific process, refer to the foregoing embodiments corresponding to FIG. 2 to FIG. 7. Details are not described herein again.

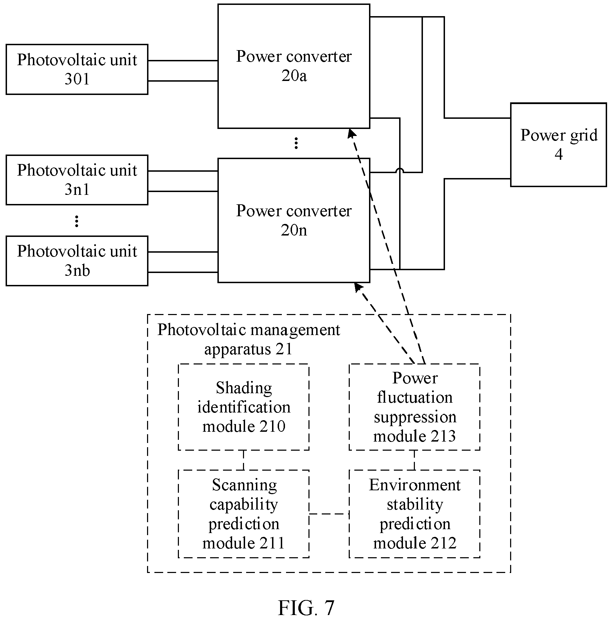

In some feasible implementations, as shown in FIG. 7, the photovoltaic management apparatus 21 shown in FIG. 2 includes a shading identification module 210, a scanning capability prediction module 211, an environment stability prediction module 212, and a power fluctuation suppression module 213. The four modules may be virtual function modules in the photovoltaic management apparatus 21. The shading identification module 210 is configured to identify whether the current moment is in the preset time period (namely, the unshaded time period) in the day. The scanning capability prediction module 211 is configured to: identify whether the intensity of radiation received, at the current moment, by the photovoltaic unit connected to the power converter is in the preset intensity interval of radiation, or identify whether the output current, at the current moment, of the photovoltaic unit connected to the power converter or the output current average values, at the current moment, of the plurality of photovoltaic units connected to the power converter are in the I-V scanning current interval. The environment stability prediction module 212 is configured to identify whether the current standard deviation of the photovoltaic unit or the plurality of photovoltaic units in the m minutes is in the preset current standard deviation interval. The power fluctuation suppression module 213 is configured to deliver the I-V scanning instruction to each of the y power converters based on comprehensive identification results of the shading identification module 210, the scanning capability prediction module 211, and the environment stability prediction module 212. It should be noted that for working principles of the shading identification module 210, the scanning capability prediction module 211, the environment stability prediction module 212, and the power fluctuation suppression module 213, refer to all operations performed by the photovoltaic management apparatus 21 in the foregoing embodiments corresponding to FIG. 2 to FIG. 7. Details are not described herein again.

In the photovoltaic system 2 according to this application, before the I-V scanning instruction is delivered, it may be automatically identified, in the preset time period in the day, whether the output current average value or the output current is in the I-V scanning current interval, and the I-V scanning instruction is delivered when all data meets the condition, to enable the power converter to perform effective I-V scanning. This can greatly reduce the quantity of times of invalid scanning performed by the power converter, thereby avoiding the frequent fluctuations of the power generation load of the photovoltaic system 2 and the energy yield loss caused by the invalid scanning to the photovoltaic system 2. In addition, the precision of the I-V curve is improved, the availability, accuracy, and consistency of the I-V diagnosis are further improved, the identification manner is more accurate and flexible, the user does not need to determine the I-V scanning condition by him/herself, and the user operation is simpler. This avoids the low precision of the I-V diagnosis caused by the inaccurate determining of the user on the I-V scanning condition, and has the high applicability.

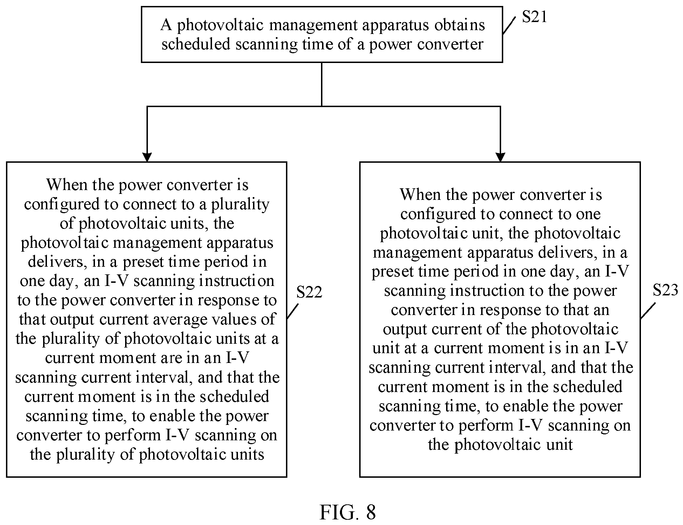

FIG. 8 is a schematic flowchart of an I-V diagnosis method for a photovoltaic management apparatus according to this application. The I-V diagnosis method is applicable to a power plant health check performed by a photovoltaic system in an I-V scanning diagnosis manner of a photovoltaic string, a photovoltaic module, and a photovoltaic cell, and is also applicable to a power plant health check performed by a photovoltaic system in another manner, for example, a power plant health check performed by the photovoltaic system by using a scheduled cleaning policy of a photovoltaic string, a photovoltaic module, and a photovoltaic cell. The photovoltaic cell may be an electroluminescent (electroluminescent, EL) cell or a photoluminescent (photoluminescent, PL) cell. For example, the photovoltaic management apparatus may be the photovoltaic management apparatus 21 shown in FIG. 2 to FIG. 7. As shown in FIG. 8, the I-V diagnosis method includes the following steps S21 to S23.

Step S21: The photovoltaic management apparatus obtains scheduled scanning time of a power converter.

The power converter is configured to connect to a photovoltaic unit.

Step S22: When the power converter is configured to connect to a plurality of photovoltaic units, the photovoltaic management apparatus delivers, in a preset time period in one day, an I-V scanning instruction to the power converter in response to that output current average values of the plurality of photovoltaic units at a current moment are in an I-V scanning current interval, and that the current moment is in the scheduled scanning time, to enable the power converter to perform I-V scanning on the plurality of photovoltaic units.

The preset time period includes a plurality of time periods or one continuous time period, and the preset time period is a time period in which the plurality of photovoltaic units are not shaded. An upper limit value of the I-V scanning current interval is less than a maximum output current of the photovoltaic unit, and a lower limit value of the I-V scanning current interval is greater than 0.

In some feasible implementations, the photovoltaic management apparatus performs curve fitting on output parameter average values of the plurality of photovoltaic units at various moments of each in n days before the current moment, to obtain a first output parameter curve of the plurality of photovoltaic units in each day. The first output parameter curve includes the output parameter average values of the plurality of photovoltaic units at the various moments in each day, and the output parameter average values may be the same as or different from output parameter average values of the plurality of photovoltaic units at the various moments in each day before curve fitting is performed. An output parameter may be an output current or an output power. Further, the photovoltaic management apparatus separately obtains differences between the output parameter average values of the plurality of photovoltaic units at the various moments in the first output parameter curve in each day and output parameter average values of moments that are in a second output parameter curve and that correspond to the various moments, to obtain output parameter average value differences of the plurality of photovoltaic units at the various moments in each day. The second output parameter curve is an output parameter curve obtained when the photovoltaic units are not shaded, and the second output parameter curve includes the output parameter average values of the plurality of photovoltaic units at the various moments in the day. The various moments in the first output parameter curve and the moments that are in the second output parameter curve and that correspond to the various moments are same moments in the day.

Further, the photovoltaic management apparatus uses, as output parameter average value loss rates of the plurality of photovoltaic units at the various moments in each day, ratios of absolute values of the output parameter average value differences of the plurality of photovoltaic units at the various moments in each day to the output parameter average values of the moments that are in the second output parameter curve and that correspond to the various moments. Further, the photovoltaic management apparatus separately performs weighted summation on output parameter average value loss rates of the plurality of photovoltaic units at same moments in the n days, to obtain shading factors of the plurality of photovoltaic units at the various moments in the day, and in response to that shading factors of the plurality of photovoltaic units at at least one moment in the day are greater than a preset shading factor threshold, uses, as shaded time periods of the plurality of photovoltaic units in the day, a sum of a period of time in which the at least one moment in the day is located. Still further, the photovoltaic management apparatus removes the shaded time periods of the plurality of photovoltaic units in the day from irradiation time periods in the day, to output the preset time period (namely, an unshaded time period) in the day.

According to embodiments of this application, after scheduled scanning is started, the preset time period in the day may be automatically identified, so that the power converter is prevented from performing I-V scanning in the time periods in which the plurality of photovoltaic units are shaded, and precision of I-V curves obtained by performing I-V scanning by the power converter is improved.

In some feasible implementations, the photovoltaic management apparatus obtains a current standard deviation of the plurality of photovoltaic units in m minutes based on output current average values of the plurality of photovoltaic units in each of the m minutes before the current moment and the output current average values of the plurality of photovoltaic units at the current moment. During specific implementation, the photovoltaic management apparatus separately normalizes, based on maximum power point currents of the photovoltaic units, the output current average values of the plurality of photovoltaic units in each of the m minutes before the current moment, to obtain the normalized output current average values of the plurality of photovoltaic units in each minute. Further, the photovoltaic management apparatus normalizes the output current average values of the plurality of photovoltaic units at the current moment based on the maximum power point currents, to obtain the normalized output current average values of the plurality of photovoltaic units at the current moment. Still further, the photovoltaic management apparatus separately obtains a difference between the normalized output current average values of the plurality of photovoltaic units in each minute and the normalized output current average values at the current moment, to obtain current residuals of the plurality of photovoltaic units in each minute, and performs standardized processing on the current residuals of the plurality of photovoltaic units in each minute, to obtain the current standard deviation of the plurality of photovoltaic units in the m minutes. According to embodiments of this application, the current standard deviation that represents current fluctuations of the photovoltaic unit in the m minutes may be collected, to determine whether an intensity fluctuation of irradiation of an environment in which the photovoltaic unit is located is relatively stable, and further predict, in advance, stability of the environment in which the photovoltaic unit is located.

Further, the photovoltaic management apparatus delivers, in the preset time period in the day, the I-V scanning instruction to the power converter in response to that the output current average values of the plurality of photovoltaic units at the current moment are in the I-V scanning current interval, that the current moment is in the scheduled scanning time, and that the current standard deviation is in a preset current standard deviation interval. When the current standard deviation is in the preset current standard deviation interval, it may indicate that intensities of irradiation received by the plurality of photovoltaic units are stable.

According to embodiments of this application, it may be automatically identified, in the preset time period in the day, whether the output current average value or the output current is in the I-V scanning current interval, whether the current moment is in the scheduled scanning time, and whether the current standard deviation is in the preset current standard deviation interval, and the I-V scanning instruction is delivered when all data meets conditions, to enable the power converter to perform I-V scanning. Therefore, the precision of the I-V curve, and the availability, accuracy, and consistency of the I-V diagnosis are improved, an I-V diagnosis error caused by environmental stability is effectively avoided, and this has higher applicability.

S23: When the power converter is configured to connect to one photovoltaic unit, the photovoltaic management apparatus delivers, in a preset time period in one day, an I-V scanning instruction to the power converter in response to that an output current of the photovoltaic unit at a current moment is in an I-V scanning current interval, and that the current moment is in the scheduled scanning time, to enable the power converter to perform I-V scanning on the photovoltaic unit.

The preset time period includes a plurality of time periods or one continuous time period, and the preset time period is a time period in which the photovoltaic unit is not shaded. An upper limit value of the I-V scanning current interval is less than a maximum output current of the photovoltaic unit, and a lower limit value of the I-V scanning current interval is greater than 0.

In some feasible implementations, the photovoltaic management apparatus performs curve fitting on output parameters of the photovoltaic unit at various moments of each in n days before the current moment, to obtain a first output parameter curve of the photovoltaic unit in each day. The first output parameter curve includes the output parameters of the photovoltaic unit at the various moments in each day, and the output parameters may be the same as or different from output parameters of the photovoltaic unit at the various moments in each day before curve fitting is performed. An output parameter may be an output current or an output power. Further, the photovoltaic management apparatus separately obtains differences between the output parameters of the photovoltaic unit at the various moments in the first output parameter curve in each day and output parameters of moments that are in a second output parameter curve and that correspond to the various moments, to obtain output parameter differences of the photovoltaic unit at the various moments in each day. The second output parameter curve is an output parameter curve obtained when the photovoltaic unit is not shaded, and the second output parameter curve includes the output parameters of the photovoltaic unit at the various moments in the day. The various moments in the first output parameter curve and the moments that are in the second output parameter curve and that correspond to the various moments are same moments in the day.

Further, the photovoltaic management apparatus uses, as output parameter loss rates of the photovoltaic unit at the various moments in each day, ratios of absolute values of the output parameter differences of the photovoltaic unit at the various moments in each day to the output parameters of the moments that are in the second output parameter curve and that correspond to the various moments. An absolute value of an output parameter difference may also be referred to as an output parameter loss amount. Further, the photovoltaic management apparatus separately performs weighted summation on output parameter loss rates of the photovoltaic unit at same moments in the n days, to obtain shading factors of the photovoltaic unit at the various moments in the day, and in response to that a shading factor of the photovoltaic unit at at least one moment in the day is greater than a preset shading factor threshold, uses, as a shaded time period of the photovoltaic unit in the day, a sum of a period of time in which the at least one moment in the day is located. Still further, the photovoltaic management apparatus removes the shaded time period of the photovoltaic unit in the day from an irradiation time period in the day, to output the preset time period (namely, an unshaded time period) in the day.

According to embodiments of this application, after scheduled scanning is started, the preset time period in the day may be automatically identified, so that the power converter is prevented from performing I-V scanning in the time period in which the photovoltaic unit is shaded, and precision of an I-V curve obtained by performing I-V scanning by the power converter is improved.

In some feasible implementations, the photovoltaic management apparatus obtains a current standard deviation of the photovoltaic unit in m minutes based on an output current of the photovoltaic unit in each of the m minutes before the current moment and the output current of the photovoltaic unit at the current moment. During specific implementation, the photovoltaic management apparatus separately normalizes, based on a maximum power point current of the photovoltaic unit, the output current of the photovoltaic unit in each minute, to obtain a normalized output current value of the photovoltaic unit in each minute. Further, the photovoltaic management apparatus normalizes the output current of the photovoltaic unit at the current moment based on the maximum power point current, to obtain a normalized output current value of the photovoltaic unit at the current moment. Still further, the photovoltaic management apparatus separately obtains a difference between the normalized output current value of the photovoltaic unit in each minute and the normalized output current value at the current moment, to obtain a current residual of the photovoltaic unit in each minute, and performs standardized processing on the current residual of the photovoltaic unit in each minute, to obtain the current standard deviation of the photovoltaic unit in the m minutes. According to embodiments of this application, the current standard deviation that represents current fluctuations of the photovoltaic unit in the m minutes may be collected, to determine whether an intensity fluctuation of irradiation of an environment in which the photovoltaic unit is located is relatively stable, and further predict, in advance, stability of the environment in which the photovoltaic unit is located.

Further, the photovoltaic management apparatus delivers, in the preset time period in the day, the I-V scanning instruction to the power converter in response to that the output current of the photovoltaic unit at the current moment is in the I-V scanning current interval, that the current moment is in the scheduled scanning time, and that the current standard deviation is in a preset current standard deviation interval. When the current standard deviation is in the preset current standard deviation interval, it may indicate that an intensity of irradiation received by the photovoltaic unit is stable.

According to embodiments of this application, it may be automatically identified, in the preset time period in the day, whether the output current average value or the output current is in the I-V scanning current interval, whether the current moment is in the scheduled scanning time, and whether the current standard deviation is in the preset current standard deviation interval, and the I-V scanning instruction is delivered when all data meets conditions, to enable the power converter to perform I-V scanning. Therefore, the precision of the I-V curve, and the availability, accuracy, and consistency of the I-V diagnosis are improved, an I-V diagnosis error caused by environmental stability is effectively avoided, and this has higher applicability.

In some feasible implementations, the photovoltaic management apparatus delivers, in the preset time period in the day, the I-V scanning instruction to the power converter in response to that intensities of irradiation received by the plurality of photovoltaic units at the current moment or an intensity of irradiation received by the photovoltaic unit at the current moment are/is in a preset intensity interval of irradiation, and that the current moment is in the scheduled scanning time. According to embodiments of this application, it may be automatically identified, in the preset time period in the day, whether the intensity of irradiation is in the preset intensity interval of irradiation and whether the current moment is in the scheduled scanning time, and the I-V scanning instruction is delivered when all data meets conditions, to enable the power converter to perform I-V scanning, thereby avoiding a large quantity of times of invalid scanning in an instant scanning manner, and improving the precision of the I-V curve. This further improves the availability, accuracy, and consistency of the I-V diagnosis, and makes a user operation simpler.

In some feasible implementations, the photovoltaic management apparatus is configured to deliver the I-V scanning instruction to the power converter in response to at least three of that the current moment is in the preset time period in the day, that the output current of the photovoltaic unit at the current moment or the output current average values of the plurality of photovoltaic units at the current moment are in the I-V scanning current interval, that the intensity of irradiation received by the photovoltaic unit at the current moment or the intensities of irradiation received by the plurality of photovoltaic units at the current moment are in the preset intensity interval of irradiation, that the current standard deviation of the photovoltaic unit or the plurality of photovoltaic units in the m minutes is in the preset current standard deviation interval, and that the current moment is in the scheduled scanning time. In embodiments of this application, after scheduled scanning is started, an appropriate I-V scanning time point (for example, the foregoing current moment) may be automatically identified from the scheduled scanning time, and an operation is more flexible.

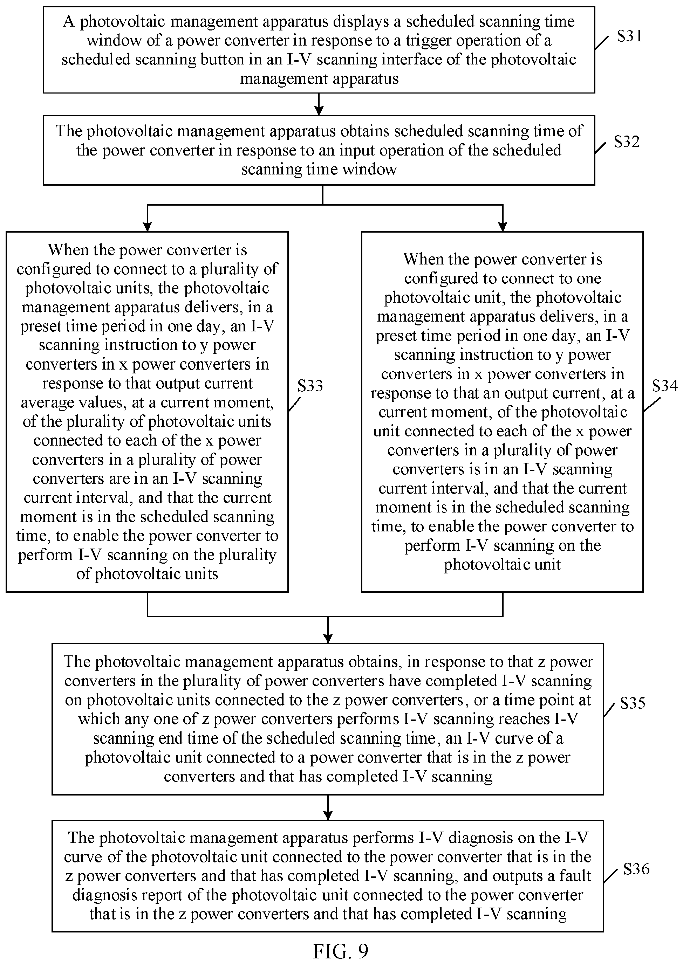

In some feasible implementations, the photovoltaic management apparatus may perform step S31 to step S36 shown in FIG. 9, to output a fault diagnosis report of the photovoltaic unit.

Step S31: The photovoltaic management apparatus displays a scheduled scanning time window of the power converter in response to a trigger operation of a scheduled scanning button in an I-V scanning interface of the photovoltaic management apparatus.

Step S32: The photovoltaic management apparatus obtains the scheduled scanning time of the power converter in response to an input operation of the scheduled scanning time window.

Step S33: When the power converter is configured to connect to the plurality of photovoltaic units, the photovoltaic management apparatus delivers, in the preset time period in the day, the I-V scanning instruction to y power converters in x power converters in response to that the output current average values, at the current moment, of the plurality of photovoltaic units connected to each of the x power converters in a plurality of power converters are in the I-V scanning current interval, and that the current moment is in the scheduled scanning time, to enable the power converter to perform I-V scanning on the plurality of photovoltaic units.

Step S34: When the power converter is configured to connect to the photovoltaic unit, the photovoltaic management apparatus delivers, in the preset time period in the day, the I-V scanning instruction to y power converters in x power converters in response to that the output current, at the current moment, of the photovoltaic unit connected to each of the x power converters in a plurality of power converters is in the I-V scanning current interval, and that the current moment is in the scheduled scanning time, to enable the power converter to perform I-V scanning on the photovoltaic unit.

In step S33 and step S34, y is an upper limit quantity of power converters that perform I-V scanning at a same moment, and the upper limit quantity is a value obtained after a product of an energy yield fluctuation amplitude of the photovoltaic system and a quantity of the plurality of power converters is rounded down or rounded up.

Step S35: The photovoltaic management apparatus obtains, in response to that z power converters in the plurality of power converters have completed I-V scanning on photovoltaic units connected to the z power converters, or a time point at which any one of z power converters performs I-V scanning reaches I-V scanning end time of the scheduled scanning time, an I-V curve of a photovoltaic unit connected to a power converter that is in the z power converters and that has completed I-V scanning.

It may be understood that, after the I-V scanning end time is reached, all of the z power converters have completed I-V scanning; or some of the z power converters have completed I-V scanning, and the other part of the z power converters have not completed I-V scanning. z and y may be the same or may be different.

Step S36: The photovoltaic management apparatus is configured to: perform I-V diagnosis on the I-V curve of the photovoltaic unit connected to the power converter that is in the z power converters and that has completed I-V scanning, and output a fault diagnosis report of the photovoltaic unit connected to the power converter that is in the z power converters and that has completed I-V scanning.

During specific implementation, for more operations performed by the photovoltaic management apparatus in the I-V diagnosis method for the photovoltaic management apparatus according to this application and beneficial effect corresponding to the operations, refer to the photovoltaic system shown in FIG. 2 to FIG. 7 and the implementations performed by the photovoltaic management apparatus in the working principle of the photovoltaic system and beneficial effect corresponding to the operations. Details are not described herein again.

In the I-V diagnosis method according to this application, after scheduled scanning is started, it may be automatically identified, in the preset time period in the day, whether the output current average value or the output current is in the I-V scanning current interval and whether the current moment is in the scheduled scanning time, and the I-V scanning instruction is delivered when all the data meets the conditions, to enable the power converter to perform effective I-V scanning, thereby avoiding the large quantity of times of invalid scanning in the instant scanning manner. Therefore, this avoids the frequent fluctuations of the power generation load of the photovoltaic system and the energy yield loss caused by the invalid scanning to the photovoltaic system. In addition, the precision of the I-V curve is improved, the availability, accuracy, and consistency of the I-V diagnosis are further improved, the identification manner is more accurate and flexible, the user does not need to determine the I-V scanning condition by him/herself, and the user operation is simpler. This avoids the low precision of the I-V diagnosis caused by the inaccurate determining of the user on the I-V scanning condition, and has the high applicability.

The foregoing description is merely a specific implementation of this application, but is not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A photovoltaic system (2), wherein the photovoltaic system comprises a power converter (20a) and a photovoltaic management apparatus (21);
an input end of the power converter is configured to connect to a photovoltaic unit (301), an output end of the power converter is configured to connect to a power grid (4), and the photovoltaic management apparatus delivers a control instruction to the power converter through communication, wherein the control instruction comprises an I-V scanning instruction; and
when the input end of the power converter is configured to connect to a plurality of photovoltaic units, the photovoltaic management apparatus is configured to deliver, in a preset time period in one day, the I-V scanning instruction to the power converter in response to that output current average values of the plurality of photovoltaic units at a current moment are in an I-V scanning current interval, wherein the preset time period comprises a plurality of time periods or one continuous time period; or
when the input end of the power converter is configured to connect to one photovoltaic unit, the photovoltaic management apparatus is configured to deliver, in a preset time period in one day, the I-V scanning instruction to the power converter in response to that an output current of the photovoltaic unit at a current moment is in an I-V scanning current interval, wherein the preset time period comprises a plurality of time periods or one continuous time period, wherein
the power converter is configured to receive the I-V scanning instruction, and perform I-V scanning on the photovoltaic unit;
the photovoltaic system **characterised in that** an upper limit value of the I-V scanning current interval is less than a maximum output current of the photovoltaic unit, a lower limit value of the I-V scanning current interval is greater than 0, and the preset time period is a time period in which the plurality of photovoltaic units are not shaded in the day.

2. The photovoltaic system (2) according to claim 1, wherein the photovoltaic management apparatus (21) is configured to:
obtain a current standard deviation of the plurality of photovoltaic units (3n1 - 3nb) in m minutes based on output current average values of the plurality of photovoltaic units in each of the m minutes before the current moment and the output current average values of the plurality of photovoltaic units at the current moment, and deliver the I-V scanning instruction to the power converter (20n) in response to that the output current average values of the plurality of photovoltaic units at the current moment are in the I-V scanning current interval, and that the current standard deviation is in a preset current standard deviation interval; or
obtain a current standard deviation of the photovoltaic unit in m minutes based on an output current of the photovoltaic unit in each of the m minutes before the current moment and the output current of the photovoltaic unit at the current moment, and deliver the I-V scanning instruction to the power converter in response to that the output current of the photovoltaic unit at the current moment is in the I-V scanning current interval, and that the current standard deviation is in a preset current standard deviation interval.

3. The photovoltaic system (2) according to claim 1, wherein the photovoltaic management apparatus (21) is configured to:
deliver, in the preset time period in the day, the I-V scanning instruction to the power converter (20n) in response to that intensities of irradiation received by the plurality of photovoltaic units (3n1 - 3nb) at the current moment or an intensity of irradiation received by the photovoltaic unit at the current moment are/is in a preset intensity interval of irradiation.

4. The photovoltaic system according to any one of claims 1 to 3, wherein the photovoltaic management apparatus (21) is configured to:
display a scheduled scanning time window of the power converter (20n) in response to a trigger operation of a scheduled scanning button in an I-V scanning interface of the photovoltaic management apparatus;
obtain scheduled scanning time of the power converter in response to an input operation of the scheduled scanning time window; and
deliver the I-V scanning instruction to the power converter in response to that the output current average values of the plurality of photovoltaic units (3n1 - 3nb) at the current moment or the output current of the photovoltaic unit at the current moment are/is in the I-V scanning current interval, and that the current moment is in the scheduled scanning time.

5. The photovoltaic system according to any one of claims 1 to 4, wherein the photovoltaic management apparatus is configured to:
perform curve fitting on output parameters of the photovoltaic unit at moments of each in n days before the current moment, to obtain a first output parameter curve of the photovoltaic unit in each day;
separately obtain differences between the output parameters of the photovoltaic unit at the various moments in the first output parameter curve in each day and output parameters of moments that are in a second output parameter curve and that correspond to the various moments, to obtain output parameter differences of the photovoltaic unit at the various moments in each day, wherein the second output parameter curve is an output parameter curve obtained when the photovoltaic unit is not shaded;
use, as output parameter loss rates of the photovoltaic unit at the various moments in each day, ratios of absolute values of the output parameter differences of the photovoltaic unit at the various moments in each day to the output parameters of the moments that are in the second output parameter curve and that correspond to the various moments, separately perform weighted summation on output parameter loss rates of the photovoltaic unit at same moments in the n days, to obtain shading factors of the photovoltaic unit at the various moments in the day, and in response to that a shading factor of the photovoltaic unit at at least one moment in the day is greater than a preset shading factor threshold, use, as a shaded time period of the photovoltaic unit in the day, a sum of a period of time in which the at least one moment in the day is located; and
remove the shaded time period of the photovoltaic unit in the day from an irradiation time period in the day, to output the preset time period in the day.

6. The photovoltaic system according to any one of claims 1 to 4, wherein the photovoltaic management apparatus is configured to:
perform curve fitting on output parameter average values of the plurality of photovoltaic units at various moments of each in n days before the current moment, to obtain a first output parameter curve of the plurality of photovoltaic units in each day;
separately obtain differences between the output parameter average values of the plurality of photovoltaic units at the various moments in the first output parameter curve in each day and output parameter average values of moments that are in a second output parameter curve and that correspond to the various moments, to obtain output parameter average value differences of the plurality of photovoltaic units at the various moments in each day, wherein the second output parameter curve is an output parameter curve obtained when the photovoltaic unit is not shaded;
use, as output parameter average value loss rates of the plurality of photovoltaic units at the various moments in each day, ratios of absolute values of the output parameter average value differences of the plurality of photovoltaic units at the various moments in each day to the output parameter average values of the moments that are in the second output parameter curve and that correspond to the various moments, separately perform weighted summation on output parameter average value loss rates of the plurality of photovoltaic units at same moments in the n days, to obtain shading factors of the plurality of photovoltaic units at the various moments in the day, and in response to that shading factors of the plurality of photovoltaic units at at least one moment in the day are greater than a preset shading factor threshold, use, as shaded time periods of the plurality of photovoltaic units in the day, a sum of a period of time in which the at least one moment in the day is located; and
remove the shaded time periods of the plurality of photovoltaic units in the day from irradiation time periods in the day, to output the preset time period in the day.

7. The photovoltaic system (2) according to any one of claims 1 to 6, wherein the photovoltaic system comprises a plurality of power converters (20a - 20n); and
the photovoltaic management apparatus (21) is configured to:
deliver the I-V scanning instruction to y power converters in x power converters in response to that the output current average values, at the current moment, of the plurality of photovoltaic units (3n1 - 3nb) connected to each of the x power converters in the plurality of power converters are in the I-V scanning current interval, or that the output current, at the current moment, of the photovoltaic unit connected to each power converter is in the I-V scanning current interval, wherein y is an upper limit quantity of power converters that perform I-V scanning at a same moment; and,
obtain, in response to that z power converters in the plurality of power converters have completed I-V scanning on photovoltaic units connected to the z power converters, or a time point at which any one of z power converters performs I-V scanning reaches I-V scanning end time, an I-V curve of a photovoltaic unit connected to a power converter that is in the z power converters and that has completed I-V scanning; and
perform I-V diagnosis on the I-V curve of the photovoltaic unit connected to the power converter that is in the z power converters and that has completed I-V scanning, and output a fault diagnosis report of the photovoltaic unit connected to the power converter that is in the z power converters and that has completed I-V scanning.

8. An I-V diagnosis method for a photovoltaic management apparatus (21), wherein the method comprises:
obtaining (S21) scheduled scanning time of a power converter (20n), wherein the power converter is configured to connect to a photovoltaic unit; and
when the power converter is configured to connect to a plurality of photovoltaic units (3n1 - 3nb), delivering (S22), in a preset time period in one day, an I-V scanning instruction to the power converter in response to that output current average values of the plurality of photovoltaic units at a current moment are in an I-V scanning current interval, and that the current moment is in the scheduled scanning time, to enable the power converter to perform I-V scanning on the plurality of photovoltaic units , wherein the preset time period comprises a plurality of time periods or one continuous time period; or
when the power converter is configured to connect to one photovoltaic unit, delivering, in a preset time period in one day, an I-V scanning instruction to the power converter in response to that an output current of the photovoltaic unit at a current moment is in an I-V scanning current interval, and that the current moment is in the scheduled scanning time, to enable the power converter to perform I-V scanning on the photovoltaic unit, wherein the preset time period comprises a plurality of time periods or one continuous time period;
the I-V diagnosis method **characterised in that** an upper limit value of the I-V scanning current interval is less than a maximum output current of the photovoltaic unit, a lower limit value of the I-V scanning current interval is greater than 0, and the preset time period is a time period in which the plurality of photovoltaic units are not shaded in the day.

9. The I-V diagnosis method according to claim 8, wherein the delivering (S22) an I-V scanning instruction to the power converter (20n) in response to that output current average values of the plurality of photovoltaic units (3n1 - 3nb) at a current moment are in an I-V scanning current interval, and that the current moment is in the scheduled scanning time comprises:
obtaining a current standard deviation of the plurality of photovoltaic units in m minutes based on output current average values of the plurality of photovoltaic units in each of the m minutes before the current moment and the output current average values of the plurality of photovoltaic units at the current moment, and delivering the I-V scanning instruction to the power converter in response to that the output current average values of the plurality of photovoltaic units at the current moment are in the I-V scanning current interval, that the current moment is in the scheduled scanning time, and that the current standard deviation is in a preset current standard deviation interval; or the delivering (S23) an I-V scanning instruction to the power converter (20a) in response to that an output current of the photovoltaic unit (301) at a current moment is in an I-V scanning current interval, and that the current moment is in the scheduled scanning time comprises:
obtaining a current standard deviation of the photovoltaic unit in m minutes based on an output current of the photovoltaic unit in each of the m minutes before the current moment and the output current of the photovoltaic unit at the current moment, and delivering the I-V scanning instruction to the power converter in response to that the output current of the photovoltaic unit at the current moment is in the I-V scanning current interval, that the current moment is in the scheduled scanning time, and that the current standard deviation is in a preset current standard deviation interval.

10. The I-V diagnosis method according to claim 8, wherein the method further comprises:
delivering, in the preset time period in the day, the I-V scanning instruction to the power converter (20n) in response to that intensities of irradiation received by the plurality of photovoltaic units (3n1 - 3nb) at the current moment or an intensity of irradiation received by the photovoltaic unit at the current moment is in a preset intensity interval of irradiation, and that the current moment are/is in the scheduled scanning time.

11. The I-V diagnosis method according to claim 8, wherein the obtaining scheduled scanning time of a power converter (20a, 20n) comprises:
displaying a scheduled scanning time window of the power converter in response to a trigger operation of a scheduled scanning button in an I-V scanning interface of the photovoltaic management apparatus (21); and
obtaining the scheduled scanning time of the power converter in response to an input operation of the scheduled scanning time window; and,
performing curve fitting on output parameters of the photovoltaic unit at various moments of each in n days before the current moment, to obtain a first output parameter curve of the photovoltaic unit in each day;
separately obtaining differences between the output parameters of the photovoltaic unit at the various moments in the first output parameter curve in each day and output parameters of moments that are in a second output parameter curve and that correspond to the various moments, to obtain output parameter differences of the photovoltaic unit at the various moments in each day, wherein the second output parameter curve is an output parameter curve obtained when the photovoltaic unit is not shaded;
using, as output parameter loss rates of the photovoltaic unit at the various moments in each day, ratios of absolute values of the output parameter differences of the photovoltaic unit at the various moments in each day to the output parameters of the moments that are in the second output parameter curve and that correspond to the various moments, separately performing weighted summation on output parameter loss rates of the photovoltaic unit at same moments in the n days, to obtain shading factors of the photovoltaic unit at the various moments in the day, and in response to that a shading factor of the photovoltaic unit at at least one moment in the day is greater than a preset shading factor threshold, using, as a shaded time period of the photovoltaic unit in the day, a sum of a period of time in which the at least one moment in the day is located; and
removing the shaded time period of the photovoltaic unit in the day from an irradiation time period in the day, to output the preset time period in the day.

12. The I-V diagnosis method according to any one of claims 8 to 11, wherein the method further comprises:
performing curve fitting on output parameter average values of the plurality of photovoltaic units at various moments of each in n days before the current moment, to obtain a first output parameter curve of the plurality of photovoltaic units in each day;
separately obtaining differences between the output parameter average values of the plurality of photovoltaic units at the various moments in the first output parameter curve in each day and output parameter average values of moments that are in a second output parameter curve and that correspond to the various moments, to obtain output parameter average value differences of the plurality of photovoltaic units at the various moments in each day, wherein the second output parameter curve is an output parameter curve obtained when the photovoltaic unit is not shaded;
using, as output parameter average value loss rates of the plurality of photovoltaic units at the various moments in each day, ratios of absolute values of the output parameter average value differences of the plurality of photovoltaic units at the various moments in each day to the output parameter average values of the moments that are in the second output parameter curve and that correspond to the various moments, separately performing weighted summation on output parameter average value loss rates of the plurality of photovoltaic units at same moments in the n days, to obtain shading factors of the plurality of photovoltaic units at the various moments in the day, and in response to that shading factors of the plurality of photovoltaic units at at least one moment in the day are greater than a preset shading factor threshold, using, as shaded time periods of the plurality of photovoltaic units in the day, a sum of a period of time in which the at least one moment in the day is located; and
removing the shaded time periods of the plurality of photovoltaic units in the day from irradiation time periods in the day, to output the preset time period in the day.

13. The I-V diagnosis method according to claim 9, wherein the obtaining a current standard deviation of the plurality of photovoltaic units (3n1 - 3nb) in m minutes based on output current average values of the plurality of photovoltaic units in each of the m minutes before the current moment and the output current average values of the plurality of photovoltaic units at the current moment comprises:
separately normalizing, based on maximum power point currents of the photovoltaic units, the output current average values of the plurality of photovoltaic units in each of the m minutes before the current moment, to obtain the normalized output current average values of the plurality of photovoltaic units in each minute;
normalizing the output current average values of the plurality of photovoltaic units at the current moment based on the maximum power point currents, to obtain the normalized output current average values of the plurality of photovoltaic units at the current moment; and
separately obtaining a difference between the normalized output current average values of the plurality of photovoltaic units in each minute and the normalized output current average values of the plurality of photovoltaic units at the current moment, to obtain current residuals of the plurality of photovoltaic units in each minute, and performing standardized processing on the current residuals of the plurality of photovoltaic units in each minute, to obtain the current standard deviation of the plurality of photovoltaic units in the m minutes.

14. The I-V diagnosis method according to claim 9, wherein the obtaining a current standard deviation of the photovoltaic unit in m minutes based on an output current of the photovoltaic unit (301) in each of the m minutes before the current moment and the output current of the photovoltaic unit at the current moment comprises:
separately normalizing, based on a maximum power point current of the photovoltaic unit, the output current of the photovoltaic unit in each of the m minutes before the current moment, to obtain a normalized output current value of the photovoltaic unit in each minute;
normalizing the output current of the photovoltaic unit at the current moment based on the maximum power point current, to obtain a normalized output current value of the photovoltaic unit at the current moment; and
separately obtaining a difference between the normalized output current value of the photovoltaic unit in each minute and the normalized output current value of the plurality of photovoltaic units at the current moment, to obtain a current residual of the photovoltaic unit in each minute, and performing standardized processing on the current residual of the photovoltaic unit in each minute, to obtain the current standard deviation of the photovoltaic unit in the m minutes.

15. The I-V diagnosis method according to claim 8, wherein the delivering (S22) an I-V scanning instruction to the power converter (20n) in response to that output current average values of the plurality of photovoltaic units (3n1 - 3nb) at a current moment are in an I-V scanning current interval, and that the current moment is in the scheduled scanning time comprises:
delivering the I-V scanning instruction to y power converters in x power converters in response to that the output current average values, at the current moment, of the plurality of photovoltaic units connected to each of the x power converters in a plurality of power converters are in the I-V scanning current interval, and that the current moment is in the scheduled scanning time, wherein y is an upper limit quantity of power converters that perform I-V scanning at a same moment; or
the delivering an I-V scanning instruction to the power converter in response to that an output current of the photovoltaic unit at a current moment is in an I-V scanning current interval, and that the current moment is in the scheduled scanning time comprises:
delivering the I-V scanning instruction to y power converters in x power converters in response to that the output current, at the current moment, of the photovoltaic unit connected to each of the x power converters in a plurality of power converters is in the I-V scanning current interval, and that the current moment is in the scheduled scanning time, wherein y is an upper limit quantity of power converters that perform I-V scanning at a same moment; and,
obtaining, in response to that z power converters in the plurality of power converters have completed I-V scanning on photovoltaic units connected to the z power converters, or a time point at which any one of z power converters performs I-V scanning reaches I-V scanning end time of the scheduled scanning time, an I-V curve of a photovoltaic unit connected to a power converter that is in the z power converters and that has completed I-V scanning; and
performing I-V diagnosis on the I-V curve of the photovoltaic unit connected to the power converter that is in the z power converters and that has completed I-V scanning, and outputting a fault diagnosis report of the photovoltaic unit connected to the power converter that is in the z power converters and that has completed I-V scanning.

## Patentansprüche

1. Fotovoltaisches System (2), wobei das fotovoltaische System einen Leistungswandler (20a) und eine fotovoltaische Verwaltungsvorrichtung (21) umfasst;
ein Eingangsende des Leistungswandlers zum Verbinden mit einer fotovoltaischen Einheit (301) konfiguriert ist, ein Ausgangsende des Leistungswandlers zum Verbinden mit einem Leistungsnetz (4) konfiguriert ist und die fotovoltaische Verwaltungsvorrichtung über eine Kommunikation eine Steueranweisung an den Leistungswandler übermittelt, wobei die Steueranweisung eine I-V-Abtastanweisung umfasst; und
wenn das Eingangsende des Leistungswandlers zum Verbinden mit einer Vielzahl von fotovoltaischen Einheiten konfiguriert ist, die fotovoltaische Verwaltungsvorrichtung konfiguriert ist, um als Reaktion darauf, dass die durchschnittlichen Ausgangsstromwerte der Vielzahl von fotovoltaischen Einheiten zu einem aktuellen Zeitpunkt in einem I-V-Abtaststromintervall liegen, in einem voreingestellten Zeitraum an einem Tag die I-V-Abtastanweisung an den Leistungswandler zu übermitteln, wobei der voreingestellte Zeitraum eine Vielzahl von Zeiträumen oder einen zusammenhängenden Zeitraum umfasst; oder
wenn das Eingangsende des Leistungswandlers zum Verbinden mit einer fotovoltaischen Einheit konfiguriert ist, die fotovoltaische Verwaltungsvorrichtung konfiguriert ist, um als Reaktion darauf, dass ein Ausgangsstrom der fotovoltaischen Einheit zu einem aktuellen Zeitpunkt in einem I-V-Abtaststromintervall liegt, in einem voreingestellten Zeitraum an einem Tag die I-V-Abtastanweisung an den Leistungswandler zu übermitteln, wobei der voreingestellte Zeitraum eine Vielzahl von Zeiträumen oder einen zusammenhängenden Zeitraum umfasst, wobei
der Leistungswandler konfiguriert ist, um die I-V-Abtastanweisung zu empfangen und ein I-V-Abtasten an der fotovoltaischen Einheit durchzuführen;
wobei das fotovoltaische System **dadurch gekennzeichnet ist, dass** ein oberer Grenzwert des I-V-Abtaststromintervalls kleiner ist als der maximale Ausgangsstrom der fotovoltaischen Einheit, ein unterer Grenzwert des I-V-Abtaststromintervalls größer als 0 ist und der voreingestellte Zeitraum ein Zeitraum ist, in dem an dem Tag kein Schatten auf die Vielzahl von fotovoltaischen Einheiten geworfen wird.

2. Fotovoltaisches System (2) nach Anspruch 1, wobei die fotovoltaische Verwaltungsvorrichtung (21) zu Folgendem konfiguriert ist:
Erlangen einer Stromstandardabweichung der Vielzahl von fotovoltaischen Einheiten (3n1-3nb) in m Minuten basierend auf den durchschnittlichen Ausgangsstromwerten der Vielzahl von fotovoltaischen Einheiten in jeder der m Minuten vor dem aktuellen Zeitpunkt und den durchschnittlichen Ausgangsstromwerten der Vielzahl von fotovoltaischen Einheiten zu dem aktuellen Zeitpunkt und Übermitteln der I-V-Abtastanweisung an den Leistungswandler (20n), als Reaktion darauf, dass die durchschnittlichen Ausgangsstromwerte der Vielzahl von fotovoltaischen Einheiten zu dem aktuellen Zeitpunkt in dem I-V-Abtaststromintervall liegen und dass die Stromstandardabweichung in einem voreingestellten Stromstandardabweichungsintervall liegt; oder
Erlangen einer Stromstandardabweichung der fotovoltaischen Einheit in m Minuten basierend auf einem Ausgangsstrom der fotovoltaischen Einheit in jeder der m Minuten vor dem aktuellen Zeitpunkt und dem Ausgangsstrom der fotovoltaischen Einheit zu dem aktuellen Zeitpunkt und Übermitteln der I-V-Abtastanweisung an den Leistungswandler als Reaktion darauf, dass der Ausgangsstrom der fotovoltaischen Einheit zu dem aktuellen Zeitpunkt in dem I-V-Abtaststromintervall liegt und dass die Stromstandardabweichung in einem voreingestellten Stromstandardabweichungsintervall liegt.

3. Fotovoltaisches System (2) nach Anspruch 1, wobei die fotovoltaische Verwaltungsvorrichtung (21) zu Folgendem konfiguriert ist:
Übermitteln der I-V-Abtastanweisung in dem voreingestellten Zeitraum an dem Tag an den Leistungswandler (20n) als Reaktion darauf, dass durch die Vielzahl von fotovoltaischen Einheiten (3n1- 3nb) zu dem aktuellen Zeitpunkt empfangene Bestrahlungsintensitäten oder eine durch die fotovoltaische Einheit zu dem aktuellen Zeitpunkt empfangene Bestrahlungsintensität in einem voreingestellten Intensitätsintervall der Bestrahlung liegen/liegt.

4. Fotovoltaisches System nach einem der Ansprüche 1 bis 3, wobei die fotovoltaische Verwaltungsvorrichtung (21) zu Folgendem konfiguriert ist:
Anzeigen eines geplanten Abtastzeitfensters des Leistungswandlers (20n) als Reaktion auf eine Auslöseoperation einer geplanten Abtasttaste in einer I-V-Abtastschnittstelle der fotovoltaischen Verwaltungsvorrichtung;
Erlangen der geplanten Abtastzeit des Leistungswandlers als Reaktion auf eine Eingabeoperation innerhalb des geplanten Abtastzeitfensters; und
Übermitteln der I-V-Abtastanweisung an den Leistungswandler als Reaktion darauf, dass die durchschnittlichen Ausgangsstromwerte der Vielzahl der fotovoltaischen Einheiten (3n1-3nb) zu dem aktuellen Zeitpunkt oder der Ausgangsstrom der fotovoltaischen Einheit zu dem aktuellen Zeitpunkt in dem I-V-Abtaststromintervall liegen/liegt und der aktuelle Zeitpunkt in der geplanten Abtastzeit liegt.

5. Fotovoltaisches System nach einem der Ansprüche 1 bis 4, wobei die fotovoltaische Verwaltungsvorrichtung zu Folgendem konfiguriert ist:
Durchführen einer Kurvenanpassung an Ausgangsparametern der fotovoltaischen Einheit zu Zeitpunkten jedes Tages in n Tagen vor dem aktuellen Zeitpunkt, um eine erste Ausgangsparameterkurve der fotovoltaischen Einheit an jedem Tag zu erlangen;
separates Erlangen von Differenzen zwischen den Ausgangsparametern der fotovoltaischen Einheit zu den verschiedenen Zeitpunkten in der ersten Ausgangsparameterkurve an jedem Tag und Ausgangsparametern zu Zeitpunkten, die sich in einer zweiten Ausgangsparameterkurve befinden und die den verschiedenen Zeitpunkten entsprechen, um Ausgangsparameterdifferenzen der fotovoltaischen Einheit zu den verschiedenen Zeitpunkten an jedem Tag zu erlangen, wobei die zweite Ausgangsparameterkurve eine Ausgangsparameterkurve ist, die erlangt wird, wenn kein Schatten auf die fotovoltaische Einheit geworfen wird;
Verwenden von Verhältnissen von Absolutwerten der Ausgangsparameterdifferenzen der fotovoltaischen Einheit zu den verschiedenen Zeitpunkten an jedem Tag zu den Ausgangsparametern der Zeitpunkte, die in der zweiten Ausgangsparameterkurve liegen und die den verschiedenen Zeitpunkten entsprechen, als Ausgangsparameterverlustraten der fotovoltaischen Einheit zu den verschiedenen Zeitpunkten an jedem Tag, separates Durchführen einer gewichteten Summierung an Ausgangsparameterverlustraten der fotovoltaischen Einheit zu denselben Zeitpunkten an den n Tagen, um Schattenwurfsfaktoren der fotovoltaischen Einheit zu den verschiedenen Zeitpunkten an dem Tag zu erlangen, und Verwenden einer Summe eines Zeitraums, in dem sich der mindestens eine Zeitpunkt an dem Tag befindet, als Schaffenwurfszeitraum der fotovoltaischen Einheit an dem Tag als Reaktion darauf, dass ein Schattenwurfsfaktor der fotovoltaischen Einheit zu mindestens einem Zeitpunkt an dem Tag größer als ein voreingestellter Schattenwurfsfaktorschwellenwert ist; und
Abziehen des Schattenwurfzeitraums der fotovoltaischen Einheit an dem Tag von einem Bestrahlungszeitraum an dem Tag, um den voreingestellten Zeitraum an dem Tag auszugeben.

6. Fotovoltaisches System nach einem der Ansprüche 1 bis 4, wobei die fotovoltaische Verwaltungsvorrichtung zu Folgendem konfiguriert ist:
Durchführen einer Kurvenanpassung an durchschnittlichen Ausgangsparameterwerten der Vielzahl von fotovoltaischen Einheiten zu verschiedenen Zeitpunkten jedes Tages in n Tagen vor dem aktuellen Zeitpunkt, um eine erste Ausgangsparameterkurve der Vielzahl von fotovoltaischen Einheiten an jedem Tag zu erlangen;
separates Erlangen von Differenzen zwischen den durchschnittlichen Ausgangsparameterwerten der Vielzahl von fotovoltaischen Einheiten zu den verschiedenen Zeitpunkten in der ersten Ausgangsparameterkurve an jedem Tag und durchschnittlichen Ausgangsparameterwerten zu Zeitpunkten, die in einer zweiten Ausgangsparameterkurve liegen und die den verschiedenen Zeitpunkten entsprechen, um durchschnittliche Ausgangsparameterwertdifferenzen der Vielzahl von fotovoltaischen Einheiten zu den verschiedenen Zeitpunkten an jedem Tag zu erlangen, wobei die zweite Ausgangsparameterkurve eine Ausgangsparameterkurve ist, die erlangt wird, wenn kein Schatten auf die fotovoltaische Einheit geworfen wird;
Verwenden von Verhältnissen von Absolutwerten der durchschnittlichen Ausgangsparameterwertdifferenzen der Vielzahl von fotovoltaischen Einheiten zu den verschiedenen Zeitpunkten an jedem Tag zu den durchschnittlichen Ausgangsparameterwerten der Zeitpunkte, die in der zweiten Ausgangsparameterkurve liegen und die den verschiedenen Zeitpunkten entsprechen, als durchschnittliche Ausgangsparameterwertverlustraten der Vielzahl von fotovoltaischen Einheiten zu den verschiedenen Zeitpunkten an jedem Tag, separates Durchführen einer gewichteten Summierung an durchschnittlichen Ausgangsparameterwertverlustraten der Vielzahl von fotovoltaischen Einheiten zu denselben Zeitpunkten an den n Tagen, um Schattenwurfsfaktoren der Vielzahl von fotovoltaischen Einheiten zu den verschiedenen Zeitpunkten an dem Tag zu erlangen, und Verwenden einer Summe eines Zeitraums, in dem sich der mindestens eine Zeitpunkt an dem Tag befindet, als Schaffenwurfszeiträume der Vielzahl von fotovoltaischen Einheiten an dem Tag als Reaktion darauf, dass Schattenwurfsfaktoren der Vielzahl von fotovoltaischen Einheiten zu mindestens einem Zeitpunkt an dem Tag größer als ein voreingestellter Schattenwurfsfaktorschwellenwert sind; und
Abziehen der Schattenwurfzeiträume der Vielzahl von fotovoltaischen Einheiten an dem Tag von Bestrahlungszeiträumen an dem Tag, um den voreingestellten Zeitraum an dem Tag auszugeben.

7. Fotovoltaisches System (2) nach einem der Ansprüche 1 bis 6, wobei das fotovoltaische System eine Vielzahl von Leistungswandlern (20a-20n) umfasst; und
die fotovoltaische Verwaltungsvorrichtung (21) zu Folgendem konfiguriert ist:
Übermitteln der I-V-Abtastanweisung an y Leistungswandler in x Leistungswandlern als Reaktion darauf, dass die durchschnittlichen Ausgangsstromwerte der mit jedem der x Leistungswandler in der Vielzahl von Leistungswandlern verbundenen Vielzahl von fotovoltaischen Einheiten (3n1- 3nb) zu dem aktuellen Zeitpunkt in dem I-V-Abtaststromintervall liegen oder dass der Ausgangsstrom der mit jedem Leistungswandler verbundenen fotovoltaischen Einheit zu dem aktuellen Zeitpunkt in dem I-V-Abtaststromintervall liegt, wobei y eine obere Grenze für die Anzahl der Leistungswandler darstellt, die gleichzeitig eine I-V-Abtastung durchführen; und,
Erlangen einer I-V-Kurve einer fotovoltaischen Einheit, die mit einem Leistungswandler verbunden ist, der sich in z Leistungswandlern befindet und der die I-V-Abtastung abgeschlossen hat, als Reaktion darauf, dass die z Leistungswandler in der Vielzahl von Leistungswandlern die I-V-Abtastung an den mit den z Leistungswandlern verbundenen fotovoltaischen Einheiten abgeschlossen haben oder dass ein Zeitpunkt, zu dem einer der z Leistungswandler die I-V-Abtastung durchführt, den I-V-Abtastendzeitpunkt erreicht; und
Durchführen einer I-V-Diagnose an der I-V-Kurve der fotovoltaischen Einheit, die mit dem Leistungswandler verbunden ist, der sich in den z Leistungswandlern befindet, und welche die I-V-Abtastung abgeschlossen hat, und Ausgaben eines Fehlerdiagnoseberichts der fotovoltaischen Einheit, die mit dem Leistungswandler verbunden ist, der sich in den z Leistungswandler befindet, und welche die I-V-Abtastung abgeschlossen hat.

8. I-V-Diagnoseverfahren für eine fotovoltaische Verwaltungsvorrichtung (21), wobei das Verfahren Folgendes umfasst:
Erlangen (S21) einer geplanten Abtastzeit eines Leistungswandlers (20n), wobei der Leistungswandler zum Verbinden mit einer fotovoltaischen Einheit konfiguriert ist; und
wenn der Leistungswandler zum Verbinden mit einer Vielzahl von fotovoltaischen Einheiten (3n1-3nb) konfiguriert ist, Übermitteln (S22) einer I-V-Abtastanweisung in einem voreingestellten Zeitraum an einem Tag an den Leistungswandler als Reaktion darauf, dass die durchschnittlichen Ausgangsstromwerte der Vielzahl von fotovoltaischen Einheiten zu einem aktuellen Zeitpunkt in einem I-V-Abtaststromintervalls liegen und dass der aktuelle Zeitpunkt in der geplante Abtastzeit liegt, um zu ermöglichen, dass der Leistungswandler eine I-V-Abtastung an der Vielzahl von fotovoltaischen Einheiten durchführt, wobei der voreingestellte Zeitraum eine Vielzahl von Zeiträumen oder einen zusammenhängenden Zeitraum umfasst; oder
wenn der Leistungswandler zum Verbinden mit einer fotovoltaischen Einheit konfiguriert ist, Übermitteln einer I-V-Abtastanweisung in einem voreingestellten Zeitraums an einem Tag an den Leistungswandler als Reaktion darauf, dass ein Ausgangsstrom der fotovoltaischen Einheit zu einem aktuellen Zeitpunkt in einem I-V-Abtaststromintervalls liegt und dass der aktuelle Zeitpunkt in der geplante Abtastzeit liegt, um zu ermöglichen, dass der Leistungswandler eine I-V-Abtastung an der fotovoltaischen Einheit durchführt, wobei der voreingestellte Zeitraum eine Vielzahl von Zeiträumen oder einen zusammenhängenden Zeitraum umfasst;
wobei das I-V-Diagnoseverfahren **dadurch gekennzeichnet ist, dass** ein oberer Grenzwert des I-V-Abtaststromintervalls kleiner ist als der maximale Ausgangsstrom der fotovoltaischen Einheit, ein unterer Grenzwert des I-V-Abtaststromintervalls größer als 0 ist und der voreingestellte Zeitraum ein Zeitraum ist, in dem an dem Tag kein Schatten auf die Vielzahl von fotovoltaischen Einheiten geworfen wird.

9. I-V-Diagnoseverfahren nach Anspruch 8, wobei das Übermitteln (S22) einer I-V-Abtastanweisung an den Leistungswandler (20n) als Reaktion darauf, dass die durchschnittlichen Ausgangsstromwerte der Vielzahl von fotovoltaischen Einheiten (3n1-3nb) zu einem aktuellen Zeitpunkt in einem I-V-Abtaststromintervall liegen und dass der aktuelle Zeitpunkt in der geplanten Abtastzeit liegt, Folgendes umfasst:
Erlangen einer Stromstandardabweichung der Vielzahl von fotovoltaischen Einheiten in m Minuten basierend auf durchschnittlichen Ausgangsstromwerten der Vielzahl von fotovoltaischen Einheiten in jeder der m Minuten vor dem aktuellen Zeitpunkt und den durchschnittlichen Ausgangsstromwerten der Vielzahl von fotovoltaischen Einheiten zu dem aktuellen Zeitpunkt und Übermitteln der I-V-Abtastanweisung an den Leistungswandler als Reaktion darauf, dass die durchschnittlichen Ausgangsstromwerte der Vielzahl von fotovoltaischen Einheiten zu dem aktuellen Zeitpunkt in dem I-V-Abtaststromintervall liegen, dass der aktuelle Zeitpunkt in der geplanten Abtastzeit liegt und dass die Stromstandardabweichung in einem voreingestellten Standardabweichungsintervall liegt; oder das Übermitteln (S23) einer I-V-Abtastanweisung an den Leistungswandler (20a) als Reaktion darauf, dass ein Ausgangsstrom der fotovoltaischen Einheit (301) zu einem aktuellen Zeitpunkt in einem I-V-Abtaststromintervall liegt und der aktuelle Zeitpunkt in der geplanten Abtastzeit liegt, Folgendes umfasst:
Erlangen einer Stromstandardabweichung der fotovoltaischen Einheit in m Minuten basierend auf einem Ausgangsstroms der fotovoltaischen Einheit in jeder der m Minuten vor dem aktuellen Zeitpunkt und dem Ausgangsstrom der fotovoltaischen Einheit zu dem aktuellen Zeitpunkt und Übermitteln der I-V-Abtastanweisung an den Leistungswandler als Reaktion darauf, dass der Ausgangsstrom der fotovoltaischen Einheit zu dem aktuellen Zeitpunkt in dem I-V-Abtaststromintervall liegt, dass der aktuelle Zeitpunkt in der geplanten Abtastzeit liegt und dass die Stromstandardabweichung in einem voreingestellten Stromstandardabweichungsintervall liegt.

10. I-V-Diagnoseverfahren nach Anspruch 8, wobei das Verfahren ferner Folgendes umfasst:
Übermitteln der I-V-Abtastanweisung in dem voreingestellten Zeitraum an dem Tag an den Leistungswandler (20n) als Reaktion darauf, dass durch die Vielzahl von fotovoltaischen Einheiten (3n1-3nb) zu dem aktuellen Zeitpunkt empfangene Bestrahlungsintensitäten oder eine durch die fotovoltaische Einheit zu dem aktuellen Zeitpunkt empfangene Bestrahlungsintensität in einem voreingestellten Intensitätsintervall der Bestrahlung liegen/liegt und dass sich der aktuelle Zeitpunkt in der geplanten Abtastzeit befindet.

11. I-V-Diagnoseverfahren nach Anspruch 8, wobei das Erlangen der geplanten Abtastzeit eines Leistungswandlers (20a, 20n) Folgendes umfasst:
Anzeigen eines geplanten Abtastzeitfensters des Leistungswandlers als Reaktion auf eine Auslöseoperation einer geplanten Abtasttaste in einer I-V-Abtastschnittstelle der fotovoltaischen Verwaltungsvorrichtung (21); und
Erlangen der geplanten Abtastzeit des Leistungswandlers als Reaktion auf eine Eingabeoperation des geplanten Abtastzeitfensters; und,
Durchführen einer Kurvenanpassung an Ausgangsparametern der fotovoltaischen Einheit zu verschiedenen Zeitpunkten jedes Tages in n Tagen vor dem aktuellen Zeitpunkt, um eine erste Ausgangsparameterkurve der fotovoltaischen Einheit an jedem Tag zu erlangen;
separates Erlangen von Differenzen zwischen den Ausgangsparametern der fotovoltaischen Einheit zu den verschiedenen Zeitpunkten in der ersten Ausgangsparameterkurve an jedem Tag und Ausgangsparametern zu Zeitpunkten, die sich in einer zweiten Ausgangsparameterkurve befinden und die den verschiedenen Zeitpunkten entsprechen, um Ausgangsparameterdifferenzen der fotovoltaischen Einheit zu den verschiedenen Zeitpunkten an jedem Tag zu erlangen, wobei die zweite Ausgangsparameterkurve eine Ausgangsparameterkurve ist, die erlangt wird, wenn kein Schatten auf die fotovoltaische Einheit geworfen wird;
Verwenden von Verhältnissen von Absolutwerten der Ausgangsparameterdifferenzen der fotovoltaischen Einheit zu den verschiedenen Zeitpunkten an jedem Tag zu den Ausgangsparametern der Zeitpunkte, die in der zweiten Ausgangsparameterkurve liegen und die den verschiedenen Zeitpunkten entsprechen, als Ausgangsparameterverlustraten der fotovoltaischen Einheit zu den verschiedenen Zeitpunkten an jedem Tag, separates Durchführen einer gewichteten Summierung an Ausgangsparameterverlustraten der fotovoltaischen Einheit zu denselben Zeitpunkten an den n Tagen, um Schattenwurfsfaktoren der fotovoltaischen Einheit zu den verschiedenen Zeitpunkten an dem Tag zu erlangen, und Verwenden einer Summe eines Zeitraums, in dem sich der mindestens eine Zeitpunkt an dem Tag befindet, als Schaffenwurfszeitraum der fotovoltaischen Einheit an dem Tag als Reaktion darauf, dass ein Schattenwurfsfaktor der fotovoltaischen Einheit zu mindestens einem Zeitpunkt an dem Tag größer als ein voreingestellter Schattenwurfsfaktorschwellenwert ist; und
Abziehen des Schattenwurfzeitraums der fotovoltaischen Einheit an dem Tag von einem Bestrahlungszeitraum an dem Tag, um den voreingestellten Zeitraum an dem Tag auszugeben.

12. I-V-Diagnoseverfahren nach einem der Ansprüche 8 bis 11, wobei das Verfahren ferner Folgendes umfasst:
Durchführen einer Kurvenanpassung an durchschnittlichen Ausgangsparameterwerten der Vielzahl von fotovoltaischen Einheiten zu verschiedenen Zeitpunkten jedes Tages in n Tagen vor dem aktuellen Zeitpunkt, um eine erste Ausgangsparameterkurve der Vielzahl von fotovoltaischen Einheiten an jedem Tag zu erlangen;
separates Erlangen von Differenzen zwischen den durchschnittlichen Ausgangsparameterwerten der Vielzahl von fotovoltaischen Einheiten zu den verschiedenen Zeitpunkten in der ersten Ausgangsparameterkurve an jedem Tag und durchschnittlichen Ausgangsparameterwerten zu Zeitpunkten in einer zweiten Ausgangsparameterkurve, die den verschiedenen Zeitpunkten entsprechen, um durchschnittliche Ausgangsparameterwertdifferenzen der Vielzahl von fotovoltaischen Einheiten zu den verschiedenen Zeitpunkten an jedem Tag zu erlangen, wobei die zweite Ausgangsparameterkurve eine Ausgangsparameterkurve ist, die erlangt wird, wenn kein Schatten auf die fotovoltaische Einheit geworfen wird;
Verwenden von Verhältnissen von Absolutwerten der durchschnittlichen Ausgangsparameterwertdifferenzen der Vielzahl von fotovoltaischen Einheiten zu den verschiedenen Zeitpunkten an jedem Tag zu den durchschnittlichen Ausgangsparameterwerten der Zeitpunkte, die in der zweiten Ausgangsparameterkurve liegen und die den verschiedenen Zeitpunkten entsprechen, als durchschnittliche Ausgangsparameterwertverlustraten der Vielzahl von fotovoltaischen Einheiten zu den verschiedenen Zeitpunkten an jedem Tag, separates Durchführen einer gewichteten Summierung an durchschnittlichen Ausgangsparameterwertverlustraten der Vielzahl von fotovoltaischen Einheiten zu denselben Zeitpunkten an den n Tagen, um Schattenwurfsfaktoren der Vielzahl von fotovoltaischen Einheiten zu den verschiedenen Zeitpunkten an dem Tag zu erlangen, und Verwenden einer Summe eines Zeitraums, in dem sich der mindestens eine Zeitpunkt an dem Tag befindet, als Schaffenwurfszeiträume der Vielzahl von fotovoltaischen Einheiten an dem Tag als Reaktion darauf, dass Schattenwurfsfaktoren der Vielzahl von fotovoltaischen Einheiten zu mindestens einem Zeitpunkt an dem Tag größer als ein voreingestellter Schattenwurfsfaktorschwellenwert sind; und
Abziehen der Schattenwurfzeiträume der Vielzahl von fotovoltaischen Einheiten an dem Tag von Bestrahlungszeiträumen an dem Tag, um den voreingestellten Zeitraum an dem Tag auszugeben.

13. I-V-Diagnoseverfahren nach Anspruch 9, wobei das Erlangen einer Stromstandardabweichung der Vielzahl von fotovoltaischen Einheiten (3n1- 3nb) in m Minuten basierend auf den durchschnittlichen Ausgangsstromwerten der Vielzahl von fotovoltaischen Einheiten in jeder der m Minuten vor dem aktuellen Zeitpunkt und der durchschnittlichen Ausgangsstromwerte der Vielzahl von fotovoltaischen Einheiten zu dem aktuellen Zeitpunkt Folgendes umfasst:
separates Normalisieren der durchschnittlichen Ausgangsstromwerte der Vielzahl von fotovoltaischen Einheiten in jeder der m Minuten vor dem aktuellen Zeitpunkt basierend auf maximalen Leistungspunktströmen der fotovoltaischen Einheiten, um die normalisierten durchschnittlichen Ausgangsstromwerte der Vielzahl von fotovoltaischen Einheiten in jeder Minute zu erlangen;
Normalisieren der durchschnittlichen Ausgangsstromwerte der Vielzahl von fotovoltaischen Einheiten zu dem aktuellen Zeitpunkt basierend auf den maximalen Leistungspunktströmen, um die normalisierten durchschnittlichen Ausgangsstromwerte der Vielzahl von fotovoltaischen Einheiten zu dem aktuellen Zeitpunkt zu erlangen; und
separates Erlangen einer Differenz zwischen den normalisieren durchschnittlichen Ausgangsstromwerten der Vielzahl von fotovoltaischen Einheiten in jeder Minute und der normalisieren durchschnittlichen Ausgangsstromwerte der Vielzahl von fotovoltaischen Einheiten zu dem aktuellen Zeitpunkt, um eine Residuallast der Vielzahl von fotovoltaischen Einheiten in jeder Minute zu erlangen, und Durchführen einer standardisierten Verarbeitung an der Residuallast der Vielzahl von fotovoltaischen Einheiten in jeder Minute, um die Stromstandardabweichung der Vielzahl von fotovoltaischen Einheiten in den m Minuten zu erlangen.

14. I-V-Diagnoseverfahren nach Anspruch 9, wobei das Erlangen einer Stromstandardabweichung der fotovoltaischen Einheit in m Minuten basierend auf einem Ausgangsstrom der fotovoltaischen Einheit (301) in jeder der m Minuten vor dem aktuellen Zeitpunkt und des Ausgangsstroms der fotovoltaischen Einheit zu dem aktuellen Zeitpunkt Folgendes umfasst:
separates Normalisieren des Ausgangsstroms der fotovoltaischen Einheit in jeder der m Minuten vor dem aktuellen Zeitpunkt basierend auf einem maximalen Leistungspunktstrom der fotovoltaischen Einheit, um einen normalisierten Ausgangsstromwert der fotovoltaischen Einheit in jeder Minute zu erlangen;
Normalisieren des Ausgangsstroms der fotovoltaischen Einheit zu dem aktuellen Zeitpunkt basierend auf dem maximalen Leistungspunktstrom, um einen normalisierten Ausgangsstromwert der fotovoltaischen Einheit zu dem aktuellen Zeitpunkt zu erlangen; und
separates Erlangen einer Differenz zwischen dem normalisieren Ausgangsstromwert der fotovoltaischen Einheit in jeder Minute und dem normalisieren Ausgangsstromwert der Vielzahl von fotovoltaischen Einheiten zu dem aktuellen Zeitpunkt, um eine Residuallast der fotovoltaischen Einheit in jeder Minute zu erlangen, und Durchführen einer standardisierten Verarbeitung an der Residuallast der fotovoltaischen Einheit in jeder Minute, um die Stromstandardabweichung der fotovoltaischen Einheit in den m Minuten zu erlangen.

15. I-V-Diagnoseverfahren nach Anspruch 8, wobei das Übermitteln (S22) einer I-V-Abtastanweisung an den Leistungswandler (20n) als Reaktion darauf, dass die durchschnittlichen Ausgangsstromwerte der Vielzahl von fotovoltaischen Einheiten (3n1-3nb) zu einem aktuellen Zeitpunkt in einem I-V-Abtaststromintervall liegen und dass der aktuelle Zeitpunkt in der geplanten Abtastzeit liegt, Folgendes umfasst:
Übermitteln der I-V-Abtastanweisung an y Leistungswandler in x Leistungswandlern als Reaktion darauf, dass die durchschnittlichen Ausgangsstromwerte der mit jedem der x Leistungswandler in einer Vielzahl von Leistungswandlern verbundenen Vielzahl von fotovoltaischen Einheiten zu dem aktuellen Zeitpunkt in dem I-V-Abtaststromintervall liegen und dass der aktuelle Zeitpunkt in der geplanten Abtastzeit liegt, wobei y eine obere Grenze für die Anzahl der Leistungswandler darstellt, die gleichzeitig eine I-V-Abtastung durchführen; oder
das Übermitteln einer I-V-Abtastanweisung an den Leistungswandler als Reaktion darauf, dass ein Ausgangsstrom der fotovoltaischen Einheit zu einem aktuellen Zeitpunkt in einem I-V-Abtaststromintervall liegt und dass der aktuelle Zeitpunkt in der geplanten Abtastzeit liegt, Folgendes umfasst:
Übermitteln der I-V-Abtastanweisung an y Leistungswandler in x Leistungswandlern als Reaktion darauf, dass der Ausgangsstrom der mit jedem der x Leistungswandler in einer Vielzahl von Leistungswandlern verbundenen fotovoltaischen Einheiten zu dem aktuellen Zeitpunkt in dem I-V-Abtaststromintervall liegt und dass der aktuelle Zeitpunkt in der geplanten Abtastzeit liegt, wobei y eine obere Grenze für die Anzahl der Leistungswandler darstellt, die gleichzeitig eine I-V-Abtastung durchführen; und,
Erlangen einer I-V-Kurve einer fotovoltaischen Einheit, die mit einem Leistungswandler verbunden ist, der sich in z Leistungswandlern befindet und der die I-V-Abtastung abgeschlossen hat, als Reaktion darauf, dass die z Leistungswandler in der Vielzahl von Leistungswandlern die I-V-Abtastung an den mit den z Leistungswandlern verbundenen fotovoltaischen Einheiten abgeschlossen haben oder dass ein Zeitpunkt, zu dem einer der z Leistungswandler die I-V-Abtastung durchführt, den I-V-Abtastendzeitpunkt der geplanten Abtastzeit erreicht; und
Durchführen einer I-V-Diagnose an der I-V-Kurve der fotovoltaischen Einheit, die mit dem Leistungswandler verbunden ist, der sich in den z Leistungswandlern befindet, und welche die I-V-Abtastung abgeschlossen hat, und Ausgaben eines Fehlerdiagnoseberichts der fotovoltaischen Einheit, die mit dem Leistungswandler verbunden ist, der sich in den z Leistungswandler befindet, und welche die I-V-Abtastung abgeschlossen hat.

## Revendications

1. Système photovoltaïque (2), dans lequel le système photovoltaïque comprend un convertisseur de puissance (20a) et un appareil de gestion photovoltaïque (21) ;
une extrémité d'entrée du convertisseur de puissance est configurée pour se connecter à une unité photovoltaïque (301), une extrémité de sortie du convertisseur de puissance est configurée pour se connecter à un réseau électrique (4), et l'appareil de gestion photovoltaïque transmet une instruction de commande au convertisseur de puissance par communication, dans lequel l'instruction de commande comprend une instruction de balayage I-V ; et
lorsque l'extrémité d'entrée du convertisseur de puissance est configurée pour se connecter à une pluralité d'unités photovoltaïques, l'appareil de gestion photovoltaïque est configuré pour transmettre, dans une période de temps prédéfinie au cours d'une journée, l'instruction de balayage I-V au convertisseur de puissance en réponse au fait que les valeurs moyennes de courant de sortie de la pluralité d'unités photovoltaïques à un instant actuel se situent dans un intervalle de courant de balayage I-V, dans lequel la période de temps prédéfinie comprend une pluralité de périodes de temps ou une période de temps continue ; ou
lorsque l'extrémité d'entrée du convertisseur de puissance est configurée pour se connecter à une unité photovoltaïque, l'appareil de gestion photovoltaïque est configuré pour transmettre, dans une période de temps prédéfinie au cours d'une journée, l'instruction de balayage I-V au convertisseur de puissance en réponse au fait qu'un courant de sortie de l'unité photovoltaïque à un instant actuel se situe dans un intervalle de courant de balayage I-V, dans lequel la période de temps prédéfinie comprend une pluralité de périodes de temps ou une période de temps continue, dans lequel
le convertisseur de puissance est configuré pour recevoir l'instruction de balayage I-V et réaliser un balayage I-V sur l'unité photovoltaïque ;
le système photovoltaïque étant **caractérisé en ce qu'**une valeur limite supérieure de l'intervalle de courant de balayage I-V est inférieure à un courant de sortie maximal de l'unité photovoltaïque, une valeur limite inférieure de l'intervalle de courant de balayage I-V est supérieure à 0 et la période de temps prédéfinie est une période de temps pendant laquelle la pluralité d'unités photovoltaïques ne sont pas ombragées au cours de la journée.

2. Système photovoltaïque (2) selon la revendication 1, dans lequel l'appareil de gestion photovoltaïque (21) est configuré pour :
obtenir un écart-type de courant de la pluralité d'unités photovoltaïques (3n1 à 3nb) sur m minutes sur la base de valeurs moyennes de courant de sortie de la pluralité d'unités photovoltaïques pour chacune des m minutes précédant l'instant actuel et des valeurs moyennes de courant de sortie de la pluralité d'unités photovoltaïques à l'instant actuel, et transmettre l'instruction de balayage I-V au convertisseur de puissance (20n) en réponse au fait que les valeurs moyennes de courant de sortie de la pluralité d'unités photovoltaïques à l'instant actuel se situent dans l'intervalle de courant de balayage I-V et que l'écart-type de courant se situe dans un intervalle d'écart-type de courant prédéfini ; ou
obtenir un écart-type de courant de l'unité photovoltaïque sur m minutes sur la base d'un courant de sortie de l'unité photovoltaïque pour chacune des m minutes précédant l'instant actuel et du courant de sortie de l'unité photovoltaïque à l'instant actuel, et transmettre l'instruction de balayage I-V au convertisseur de puissance en réponse au fait que le courant de sortie de l'unité photovoltaïque à l'instant actuel se situe dans l'intervalle de courant de balayage I-V et que l'écart-type de courant se situe dans un intervalle d'écart-type de courant prédéfini.

3. Système photovoltaïque (2) selon la revendication 1, dans lequel l'appareil de gestion photovoltaïque (21) est configuré pour :
transmettre, dans la période de temps prédéfinie au cours de la journée, l'instruction de balayage I-V au convertisseur de puissance (20n) en réponse au fait que les intensités d'irradiation reçues par la pluralité d'unités photovoltaïques (3n1 _{A} 3nb) à l'instant actuel ou une intensité d'irradiation reçue par l'unité photovoltaïque à l'instant actuel se situent dans un intervalle d'intensité d'irradiation prédéfini.

4. Système photovoltaïque selon l'une quelconque des revendications 1 à 3, dans lequel l'appareil de gestion photovoltaïque (21) est configuré pour :
afficher une fenêtre de temps de balayage programmé du convertisseur de puissance (20n) en réponse à une opération de déclenchement d'un bouton de balayage programmé dans une interface de balayage I-V de l'appareil de gestion photovoltaïque ;
obtenir un temps de balayage programmé du convertisseur de puissance en réponse à une opération d'entrée de la fenêtre de temps de balayage programmé ; et
transmettre l'instruction de balayage I-V au convertisseur de puissance en réponse au fait que les valeurs moyennes de courant de sortie de la pluralité d'unités photovoltaïques (3n1 à 3nb) à l'instant actuel ou le courant de sortie de l'unité photovoltaïque à l'instant actuel se situent dans l'intervalle de courant de balayage I-V, et que l'instant actuel est dans le temps de balayage programmé.

5. Système photovoltaïque selon l'une quelconque des revendications 1 à 4, dans lequel l'appareil de gestion photovoltaïque est configuré pour :
réaliser un ajustement de courbe sur des paramètres de sortie de l'unité photovoltaïque à des instants de chacun des n jours précédant l'instant actuel, pour obtenir une première courbe de paramètres de sortie de l'unité photovoltaïque pour chaque jour ;
obtenir séparément des différences entre les paramètres de sortie de l'unité photovoltaïque aux différents instants dans la première courbe de paramètres de sortie pour chaque jour et les paramètres de sortie d'instants qui se situent dans une seconde courbe de paramètres de sortie et qui correspondent aux différents instants, pour obtenir des différences de paramètres de sortie de l'unité photovoltaïque aux différents instants pour chaque jour, dans lequel la seconde courbe de paramètres de sortie est une courbe de paramètres de sortie obtenue lorsque l'unité photovoltaïque n'est pas ombragée ;
utiliser, comme taux de perte de paramètres de sortie de l'unité photovoltaïque aux différents instants pour chaque jour, des rapports de valeurs absolues des différences de paramètres de sortie de l'unité photovoltaïque aux différents instants pour chaque jour par rapport aux paramètres de sortie des instants qui se situent dans la seconde courbe de paramètres de sortie et qui correspondent aux différents instants, réaliser séparément une sommation pondérée sur des taux de perte de paramètres de sortie de l'unité photovoltaïque aux mêmes instants des n jours, pour obtenir des facteurs d'ombrage de l'unité photovoltaïque aux différents instants au cours de la journée et, en réponse au fait qu'un facteur d'ombrage de l'unité photovoltaïque à au moins un instant au cours de la journée est supérieur à un seuil de facteur d'ombrage prédéfini, utiliser, comme période de temps ombragée de l'unité photovoltaïque au cours de la journée, une somme d'une période de temps dans laquelle se situe l'au moins un instant au cours de la journée ; et
soustraire la période de temps ombragée de l'unité photovoltaïque au cours de la journée d'une période de temps d'irradiation au cours de la journée, pour produire la période de temps prédéfinie au cours de la journée.

6. Système photovoltaïque selon l'une quelconque des revendications 1 à 4, dans lequel l'appareil de gestion photovoltaïque est configuré pour :
réaliser un ajustement de courbe sur des valeurs moyennes de paramètres de sortie de la pluralité d'unités photovoltaïques à différents instants de chacun des n jours précédant l'instant actuel, pour obtenir une première courbe de paramètres de sortie de la pluralité d'unités photovoltaïques pour chaque jour ;
obtenir séparément des différences entre les valeurs moyennes de paramètres de sortie de la pluralité d'unités photovoltaïques aux différents instants dans la première courbe de paramètres de sortie pour chaque jour et les valeurs moyennes de paramètres de sortie d'instants qui se situent dans une seconde courbe de paramètres de sortie et qui correspondent aux différents instants, pour obtenir des différences de valeurs moyennes de paramètres de sortie de la pluralité d'unités photovoltaïques aux différents instants pour chaque jour, dans lequel la seconde courbe de paramètres de sortie est une courbe de paramètres de sortie obtenue lorsque l'unité photovoltaïque n'est pas ombragée ;
utiliser, comme taux de perte de valeurs moyennes de paramètres de sortie de la pluralité d'unités photovoltaïques aux différents instants pour chaque jour, des rapports de valeurs absolues des différences de valeurs moyennes de paramètres de sortie de la pluralité d'unités photovoltaïques aux différents instants pour chaque jour par rapport aux valeurs moyennes de paramètres de sortie des instants qui se situent dans la seconde courbe de paramètres de sortie et qui correspondent aux différents instants, réaliser séparément une sommation pondérée sur des taux de perte de valeurs moyennes de paramètres de sortie de la pluralité d'unités photovoltaïques aux mêmes instants des n jours, pour obtenir des facteurs d'ombrage de la pluralité d'unités photovoltaïques aux différents instants au cours de la journée et, en réponse au fait que des facteurs d'ombrage de la pluralité d'unités photovoltaïques à au moins un instant au cours de la journée sont supérieurs à un seuil de facteur d'ombrage prédéfini, utiliser, comme périodes de temps ombragées de la pluralité d'unités photovoltaïques au cours de la journée, une somme d'une période de temps dans laquelle se situe l'au moins un instant au cours de la journée ; et
soustraire les périodes de temps ombragées de la pluralité d'unités photovoltaïques au cours de la journée de périodes de temps d'irradiation au cours de la journée, pour produire la période de temps prédéfinie au cours de la journée.

7. Système photovoltaïque (2) selon l'une quelconque des revendications 1 à 6, dans lequel le système photovoltaïque comprend une pluralité de convertisseurs de puissance (20a à 20n) ; et
l'appareil de gestion photovoltaïque (21) est configuré pour :
transmettre l'instruction de balayage I-V à y convertisseurs de puissance parmi x convertisseurs de puissance en réponse au fait que les valeurs moyennes de courant de sortie, à l'instant actuel, de la pluralité d'unités photovoltaïques (3N1 à 3nb) connectées à chacun des x convertisseurs de puissance parmi la pluralité de convertisseurs de puissance se situent dans l'intervalle de courant de balayage I-V, ou au fait que le courant de sortie, à l'instant actuel, de l'unité photovoltaïque connectée à chaque convertisseur de puissance se situe dans l'intervalle de courant de balayage I-V, dans lequel y est une quantité limite supérieure de convertisseurs de puissance qui réalisent un balayage I-V à un même instant ; et,
obtenir, en réponse au fait que z convertisseurs de puissance parmi la pluralité de convertisseurs de puissance ont terminé un balayage I-V sur des unités photovoltaïques connectées aux z convertisseurs de puissance, ou un instant auquel l'un quelconque parmi z convertisseurs de puissance réalise un balayage I-V atteint un temps de fin de balayage I-V, une courbe I-V d'une unité photovoltaïque connectée à un convertisseur de puissance qui se situe parmi les z convertisseurs de puissance et qui a terminé un balayage I-V ; et
réaliser un diagnostic I-V sur la courbe I-V de l'unité photovoltaïque connectée au convertisseur de puissance qui se situe parmi les z convertisseurs de puissance et qui a terminé un balayage I-V, et produire un rapport de diagnostic de défaut de l'unité photovoltaïque connectée au convertisseur de puissance qui se situe parmi les z convertisseurs de puissance et qui a terminé un balayage I-V.

8. Procédé de diagnostic I-V pour un appareil de gestion photovoltaïque (21), dans lequel le procédé comprend :
l'obtention (S21) d'un temps de balayage programmé d'un convertisseur de puissance (20n), dans lequel le convertisseur de puissance est configuré pour se connecter à une unité photovoltaïque ; et
lorsque le convertisseur de puissance est configuré pour se connecter à une pluralité d'unités photovoltaïques (3n1 à 3nb), la transmission (S22), dans une période de temps prédéfinie au cours d'une journée, d'une instruction de balayage I-V au convertisseur de puissance en réponse au fait que des valeurs moyennes de courant de sortie de la pluralité d'unités photovoltaïques à un instant actuel se situent dans un intervalle de courant de balayage I-V, et que l'instant actuel se situe dans le temps de balayage programmé, afin de permettre au convertisseur de puissance de réaliser un balayage I-V sur la pluralité d'unités photovoltaïques, dans lequel la période de temps prédéfinie comprend une pluralité de périodes de temps ou une période de temps continue ; ou
lorsque le convertisseur de puissance est configuré pour se connecter à une unité photovoltaïque, la transmission, dans une période de temps prédéfinie au cours d'une journée, d'une instruction de balayage I-V au convertisseur de puissance en réponse au fait qu'un courant de sortie de l'unité photovoltaïque à un instant actuel se situe dans un intervalle de courant de balayage I-V, et que l'instant actuel se situe dans le temps de balayage programmé, afin de permettre au convertisseur de puissance de réaliser un balayage I-V sur l'unité photovoltaïque, dans lequel la période de temps prédéfinie comprend une pluralité de périodes de temps ou une période de temps continue ;
le procédé de diagnostic I-V étant **caractérisé en ce qu'**une valeur limite supérieure de l'intervalle de courant de balayage I-V est inférieure à un courant de sortie maximal de l'unité photovoltaïque, une valeur limite inférieure de l'intervalle de courant de balayage I-V est supérieure à 0 et la période de temps prédéfinie est une période de temps pendant laquelle la pluralité d'unités photovoltaïques ne sont pas ombragées au cours de la journée.

9. Procédé de diagnostic I-V selon la revendication 8, dans lequel la transmission (S22) d'une instruction de balayage I-V au convertisseur de puissance (20n) en réponse au fait que des valeurs moyennes de courant de sortie de la pluralité d'unités photovoltaïques (3n1 à 3nb) à un instant actuel se situent dans un intervalle de courant de balayage I-V, et que l'instant actuel se situe dans le temps de balayage programmé, comprend :
l'obtention d'un écart-type de courant de la pluralité d'unités photovoltaïques sur m minutes sur la base de valeurs moyennes de courant de sortie de la pluralité d'unités photovoltaïques pour chacune des m minutes précédant l'instant actuel et des valeurs moyennes de courant de sortie de la pluralité d'unités photovoltaïques à l'instant actuel, et la transmission de l'instruction de balayage I-V au convertisseur de puissance en réponse au fait que les valeurs moyennes de courant de sortie de la pluralité d'unités photovoltaïques à l'instant actuel se situent dans l'intervalle de courant de balayage I-V, que l'instant actuel se situe dans le temps de balayage programmé et que l'écart-type de courant se situe dans un intervalle d'écart-type de courant prédéfini ; ou la transmission (S23) d'une instruction de balayage I-V au convertisseur de puissance (20a) en réponse au fait qu'un courant de sortie de l'unité photovoltaïque (301) à un instant actuel se situe dans un intervalle de courant de balayage I-V et que l'instant actuel se situe dans le temps de balayage programmé comprend :
l'obtention d'un écart-type de courant de l'unité photovoltaïque sur m minutes sur la base d'un courant de sortie de l'unité photovoltaïque pour chacune des m minutes précédant l'instant actuel et du courant de sortie de l'unité photovoltaïque à l'instant actuel, et la transmission de l'instruction de balayage I-V au convertisseur de puissance en réponse au fait que le courant de sortie de l'unité photovoltaïque à l'instant actuel se situe dans l'intervalle de courant de balayage I-V, que l'instant actuel se situe dans le temps de balayage programmé et que l'écart-type de courant se situe dans un intervalle d'écart-type de courant prédéfini.

10. Procédé de diagnostic I-V selon la revendication 8, dans lequel le procédé comprend en outre :
la transmission, dans la période de temps prédéfinie au cours de la journée, de l'instruction de balayage I-V au convertisseur de puissance (20n) en réponse au fait que les intensités d'irradiation reçues par la pluralité d'unités photovoltaïques (3n1 à 3nb) à l'instant actuel ou une intensité d'irradiation reçue par l'unité photovoltaïque à l'instant actuel se situent dans un intervalle d'intensité d'irradiation prédéfini et que l'instant actuel se situe dans le temps de balayage programmé.

11. Procédé de diagnostic I-V selon la revendication 8, dans lequel l'obtention d'un temps de balayage programmé d'un convertisseur de puissance (20a, 20n) comprend :
l'affichage d'une fenêtre de temps de balayage programmé du convertisseur de puissance en réponse à une opération de déclenchement d'un bouton de balayage programmé dans une interface de balayage I-V de l'appareil de gestion photovoltaïque (21) ; et
l'obtention d'un temps de balayage programmé du convertisseur de puissance en réponse à une opération d'entrée de la fenêtre de temps de balayage programmé ; et,
la réalisation d'un ajustement de courbe sur des paramètres de sortie de l'unité photovoltaïque à différents instants de chacun des n jours précédant l'instant actuel, pour obtenir une première courbe de paramètres de sortie de l'unité photovoltaïque pour chaque jour ;
l'obtention séparée de différences entre les paramètres de sortie de l'unité photovoltaïque aux différents instants dans la première courbe de paramètres de sortie pour chaque jour et les paramètres de sortie d'instants qui se situent dans une seconde courbe de paramètres de sortie et qui correspondent aux différents instants, pour obtenir des différences de paramètres de sortie de l'unité photovoltaïque aux différents instants pour chaque jour, dans lequel la seconde courbe de paramètres de sortie est une courbe de paramètres de sortie obtenue lorsque l'unité photovoltaïque n'est pas ombragée ;
l'utilisation, comme taux de perte de paramètres de sortie de l'unité photovoltaïque aux différents instants pour chaque jour, de rapports de valeurs absolues des différences de paramètres de sortie de l'unité photovoltaïque aux différents instants pour chaque jour par rapport aux paramètres de sortie des instants qui se situent dans la seconde courbe de paramètres de sortie et qui correspondent aux différents instants, la réalisation séparée d'une sommation pondérée sur des taux de perte de paramètres de sortie de l'unité photovoltaïque aux mêmes instants des n jours, pour obtenir des facteurs d'ombrage de l'unité photovoltaïque aux différents instants au cours de la journée et, en réponse au fait qu'un facteur d'ombrage de l'unité photovoltaïque à au moins un instant au cours de la journée est supérieur à un seuil de facteur d'ombrage prédéfini, l'utilisation, comme période de temps ombragée de l'unité photovoltaïque au cours de la journée, d'une somme d'une période de temps dans laquelle se situe l'au moins un instant au cours de la journée ; et
la soustraction de la période de temps ombragée de l'unité photovoltaïque au cours de la journée d'une période de temps d'irradiation au cours de la journée, pour produire la période de temps prédéfinie au cours de la journée.

12. Procédé de diagnostic I-V selon l'une quelconque des revendications 8 à 11, dans lequel le procédé comprend en outre :
la réalisation d'un ajustement de courbe sur des valeurs moyennes de paramètres de sortie de la pluralité d'unités photovoltaïques à différents instants de chacun des n jours précédant l'instant actuel, pour obtenir une première courbe de paramètres de sortie de la pluralité d'unités photovoltaïques pour chaque jour ;
l'obtention séparée de différences entre les valeurs moyennes de paramètres de sortie de la pluralité d'unités photovoltaïques aux différents instants dans la première courbe de paramètres de sortie pour chaque jour et les valeurs moyennes de paramètres de sortie d'instants qui se situent dans une seconde courbe de paramètres de sortie et qui correspondent aux différents instants, pour obtenir des différences de valeurs moyennes de paramètres de sortie de la pluralité d'unités photovoltaïques aux différents instants pour chaque jour, dans lequel la seconde courbe de paramètres de sortie est une courbe de paramètres de sortie obtenue lorsque l'unité photovoltaïque n'est pas ombragée ;
l'utilisation, comme taux de perte de valeurs moyennes de paramètres de sortie de la pluralité d'unités photovoltaïques aux différents instants pour chaque jour, de rapports de valeurs absolues des différences de valeurs moyennes de paramètres de sortie de la pluralité d'unités photovoltaïques aux différents instants pour chaque jour par rapport aux valeurs moyennes de paramètres de sortie des instants qui se situent dans la seconde courbe de paramètres de sortie et qui correspondent aux différents instants, la réalisation séparée d'une sommation pondérée sur des taux de perte de valeurs moyennes de paramètres de sortie de la pluralité d'unités photovoltaïques aux mêmes instants des n jours, pour obtenir des facteurs d'ombrage de la pluralité d'unités photovoltaïques aux différents instants au cours de la journée et, en réponse au fait que des facteurs d'ombrage de la pluralité d'unités photovoltaïques à au moins un instant au cours de la journée sont supérieurs à un seuil de facteur d'ombrage prédéfini, l'utilisation, comme périodes de temps ombragées de la pluralité d'unités photovoltaïques au cours de la journée, d'une somme d'une période de temps dans laquelle se situe l'au moins un instant au cours de la journée ; et
la soustraction des périodes de temps ombragées de la pluralité d'unités photovoltaïques au cours de la journée de périodes de temps d'irradiation au cours de la journée, pour produire la période de temps prédéfinie au cours de la journée.

13. Procédé de diagnostic I-V selon la revendication 9, dans lequel l'obtention d'un écart-type de courant de la pluralité d'unités photovoltaïques (3n1 à 3nb) sur m minutes, sur la base de valeurs moyennes de courant de sortie de la pluralité d'unités photovoltaïques pour chacune des m minutes précédant l'instant actuel et des valeurs moyennes de courant de sortie de la pluralité d'unités photovoltaïques à l'instant actuel, comprend :
la normalisation séparée, sur la base de courants de point de puissance maximale des unités photovoltaïques, des valeurs moyennes de courant de sortie de la pluralité d'unités photovoltaïques pour chacune des m minutes précédant l'instant actuel, pour obtenir les valeurs moyennes de courant de sortie normalisées de la pluralité d'unités photovoltaïques pour chaque minute ;
la normalisation des valeurs moyennes de courant de sortie de la pluralité d'unités photovoltaïques à l'instant actuel sur la base des courants de point de puissance maximale, pour obtenir les valeurs moyennes de courant de sortie normalisées de la pluralité d'unités photovoltaïques à l'instant actuel ; et
l'obtention séparée d'une différence entre les valeurs moyennes de courant de sortie normalisées de la pluralité d'unités photovoltaïques pour chaque minute et les valeurs moyennes de courant de sortie normalisées de la pluralité d'unités photovoltaïques à l'instant actuel, pour obtenir des résidus de courant de la pluralité d'unités photovoltaïques pour chaque minute, et la réalisation d'un traitement standardisé sur les résidus de courant de la pluralité d'unités photovoltaïques pour chaque minute, pour obtenir l'écart-type de courant de la pluralité d'unités photovoltaïques sur les m minutes.

14. Procédé de diagnostic I-V selon la revendication 9, dans lequel l'obtention d'un écart-type de courant de l'unité photovoltaïque sur m minutes sur la base d'un courant de sortie de l'unité photovoltaïque (301) pour chacune des m minutes précédant l'instant actuel et du courant de sortie de l'unité photovoltaïque à l'instant actuel comprend :
la normalisation séparée, sur la base d'un courant de point de puissance maximale de l'unité photovoltaïque, du courant de sortie de l'unité photovoltaïque pour chacune des m minutes précédant l'instant actuel, pour obtenir une valeur de courant de sortie normalisée de l'unité photovoltaïque pour chaque minute ;
la normalisation du courant de sortie de l'unité photovoltaïque à l'instant actuel sur la base du courant de point de puissance maximale, pour obtenir une valeur de courant de sortie normalisée de l'unité photovoltaïque à l'instant actuel ; et
l'obtention séparée d'une différence entre la valeur de courant de sortie normalisée de l'unité photovoltaïque pour chaque minute et la valeur de courant de sortie normalisée de la pluralité d'unités photovoltaïques à l'instant actuel, pour obtenir un résidu de courant de l'unité photovoltaïque pour chaque minute, et la réalisation d'un traitement standardisé sur le résidu de courant de l'unité photovoltaïque pour chaque minute, pour obtenir l'écart-type de courant de l'unité photovoltaïque sur les m minutes.

15. Procédé de diagnostic I-V selon la revendication 8, dans lequel la transmission (S22) d'une instruction de balayage I-V au convertisseur de puissance (20n) en réponse au fait que des valeurs moyennes de courant de sortie de la pluralité d'unités photovoltaïques (3n1 à 3nb) à un instant actuel se situent dans un intervalle de courant de balayage I-V, et que l'instant actuel se situe dans le temps de balayage programmé, comprend :
la transmission de l'instruction de balayage I-V à y convertisseurs de puissance parmi x convertisseurs de puissance en réponse au fait que les valeurs moyennes de courant de sortie, à l'instant actuel, de la pluralité d'unités photovoltaïques connectées à chacun des x convertisseurs de puissance parmi une pluralité de convertisseurs de puissance se situent dans l'intervalle de courant de balayage I-V, et au fait que l'instant actuel se situe dans le temps de balayage programmé, dans lequel y est une quantité limite supérieure de convertisseurs de puissance qui réalisent un balayage I-V à un même instant ; ou
la transmission d'une instruction de balayage I-V au convertisseur de puissance en réponse au fait qu'un courant de sortie de l'unité photovoltaïque à un instant actuel se situe dans un intervalle de courant de balayage I-V, et que l'instant actuel se situe dans le temps de balayage programmé, comprend :
la transmission de l'instruction de balayage I-V à y convertisseurs de puissance parmi x convertisseurs de puissance en réponse au fait que le courant de sortie, à l'instant actuel, de l'unité photovoltaïque connectée à chacun des x convertisseurs de puissance parmi une pluralité de convertisseurs de puissance se situe dans l'intervalle de courant de balayage I-V, et au fait que l'instant actuel se situe dans le temps de balayage programmé, dans lequel y est une quantité limite supérieure de convertisseurs de puissance qui réalisent un balayage I-V à un même instant ; et,
l'obtention, en réponse au fait que z convertisseurs de puissance parmi la pluralité de convertisseurs de puissance ont terminé un balayage I-V sur des unités photovoltaïques connectées aux z convertisseurs de puissance, ou un instant auquel l'un quelconque parmi z convertisseurs de puissance réalise un balayage I-V atteint un temps de fin de balayage I-V du temps de balayage programmé, d'une courbe I-V d'une unité photovoltaïque connectée à un convertisseur de puissance qui se situe parmi les z convertisseurs de puissance et qui a terminé un balayage I-V ; et
la réalisation d'un diagnostic I-V sur la courbe I-V de l'unité photovoltaïque connectée au convertisseur de puissance qui se situe parmi les z convertisseurs de puissance et qui a terminé un balayage I-V, et la production d'un rapport de diagnostic de défaut de l'unité photovoltaïque connectée au convertisseur de puissance qui se situe parmi les z convertisseurs de puissance et qui a terminé un balayage I-V.
